(19) Europäisches Patentamt
European Patent Office
Office européen des brevets

(11) EP 4 810 578 A1

(12) **EUROPEAN PATENT APPLICATION**
published in accordance with Art. 153(4) EPC

(43) Date of publication:
**23.09.2026 Bulletin 2026/39**

(21) Application number: **24891166.1**

(22) Date of filing: **22.10.2024**

(51) International Patent Classification (IPC):
***C09D 11/54*** *(2014.01)* ***B41J 2/01*** *(2006.01)*

(52) Cooperative Patent Classification (CPC):
**B41J 2/01; B41M 5/00; C09D 11/322; C09D 11/54**

(86) International application number:
**PCT/JP2024/037483**

(87) International publication number:
**WO 2025/105125 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 JP 2023195071**

(71) Applicant: **Kao Corporation**
**Tokyo 103-8210 (JP)**

(72) Inventors:
- **YOSHIKAWA Takahiro**
  **Tokyo 103-8210 (JP)**
- **KURODA Azusa**
  **Tokyo 103-8210 (JP)**
- **UEDA Naoki**
  **Tokyo 103-8210 (JP)**
- **SAITO Nozomi**
  **Tokyo 103-8210 (JP)**

(74) Representative: **Hoffmann Eitle**
**Patent- und Rechtsanwälte PartmbB**
**Arabellastraße 30**
**81925 München (DE)**

(54) **INK SET FOR INKJET PRINTING**

(57) Provided are an inkjet printing ink set, an inkjet printing method, and a packaging method that provide a heat-shrunk printed material having excellent scratch resistance and water resistance when printing on a heat-shrinkable resin film. The inkjet printing ink set includes: a water-based ink containing a pigment; and an overcoat liquid substantially free of pigment, wherein the water-based ink contains a binder resin (Ib) having carboxy groups, wherein the overcoat liquid contains a compound (II) having a reactive group capable of cross-linking with the carboxy group of the binder resin (Ib), and wherein a surface tension y(B) of the overcoat liquid is greater than a surface tension y(A) of the water-based ink. Also provided are an inkjet printing method using the ink set and a packaging method using a printed material obtained using the inkjet printing method.



Processed by Luminess, 75001 PARIS (FR)

## Description

### Technical Field

The present invention relates to an inkjet printing ink set, an inkjet printing method, and a packaging method.

### Background Art

In the fields of commercial and industrial printing, in addition to printing on conventional high-absorbency printing substrates such as plain paper and copy paper, there is a growing demand for printing on low-absorbency printing substrates such as offset coated paper, and non-absorbency printing substrates such as resin films of polyethylene terephthalate (PET), polyvinyl chloride (PVC), polyethylene (PE), polypropylene (PP), nylon (NY), and the like.
However, when performing printing on a low-absorbency or non-absorbency printing substrate, liquid components are absorbed slowly or not at all. Therefore, the adhesion of a pigment ink to these printing substrates is insufficient, and the image fastness of a printed material tends to be low. In view of this, in order to improve the image fastness of a printed material obtained using a pigment ink, aqueous compositions such as coating solutions to be used in combination with the pigment ink have been developed.
For example, JP 2019-189867 A (Patent Document 1) describes an aqueous composition for inkjet recording containing a blocked isocyanate, water, and at least one compound selected from a carbodiimide compound and an oxazoline compound, in order to improve the scratch resistance, solvent resistance, and substrate adhesion of a printed material; an ink set for inkjet recording containing the aqueous composition and a water-based ink; and an inkjet recording method using the aqueous composition and a water-based ink.

### Summary of Invention

The present invention relates to an inkjet printing ink set including: a water-based ink containing a pigment; and an overcoat liquid substantially free of pigment, wherein the water-based ink contains a binder resin (Ib) having carboxy groups, wherein the overcoat liquid contains a compound (II) having a reactive group capable of cross-linking with the carboxy group of the binder resin (Ib), and wherein a surface tension y(B) of the overcoat liquid is greater than a surface tension y(A) of the water-based ink.
In addition, the present invention relates to an inkjet printing ink set including: a water-based ink containing a pigment; and an overcoat liquid substantially free of pigment, wherein the water-based ink contains a compound (II) having a reactive group capable of cross-linking with a carboxy group of a binder resin (Ib) having carboxy groups, wherein the overcoat liquid contains the binder resin (Ib) having carboxy groups, and wherein a surface tension y(B) of the overcoat liquid is greater than a surface tension y(A) of the water-based ink.

### Embodiments of the Invention

Conventionally, as in Patent Document 1, there have been examples in which printing is performed using a cross-linking agent such as a blocked isocyanate compound, a carbodiimide compound, or an oxazoline compound as an overcoat liquid, and a cross-linking reaction is facilitated through heating.
However, it has been found that, when performing printing on heat-shrinkable resin films, which are widely used as substrates for packaging, such as PET bottles, the cross-linking reaction by the cross-linking agent does not occur uniformly, resulting in uneven strength of a printed coating, and as a resin film shrinks, a portion of the printed coating with a low strength is preferentially destroyed, impairing the scratch resistance and water resistance of the printed material after heat shrinkage.
The present invention relates to an inkjet printing ink set, an inkjet printing method, and a packaging method that provide a heat-shrunk printed material having excellent scratch resistance and water resistance when printing on a heat-shrinkable resin film.
The inventors of the present invention have found that the above issues can be resolved by providing an inkjet printing ink set including: a water-based ink containing a pigment; and an overcoat liquid substantially free of pigment, wherein the water-based ink contains a binder resin having carboxy groups, wherein the overcoat liquid contains a compound having a reactive group capable of cross-linking with the carboxy group of the binder resin, and wherein a surface tension of the overcoat liquid is greater than a surface tension of the water-based ink, thereby allowing the cross-linking reaction of the binder resin to proceed uniformly.
That is, the present invention relates to the following [1] to [4].

[1] An inkjet printing ink set including: a water-based ink containing a pigment; and an overcoat liquid substantially free

of pigment,

wherein the water-based ink contains a binder resin (Ib) having carboxy groups,
wherein the overcoat liquid contains a compound (II) having a reactive group capable of cross-linking with the carboxy group of the binder resin (Ib), and
wherein a surface tension y(B) of the overcoat liquid is greater than a surface tension y(A) of the water-based ink.

[2] An inkjet printing ink set including: a water-based ink containing a pigment; and an overcoat liquid substantially free of pigment,

wherein the water-based ink contains a compound (II) having a reactive group capable of cross-linking with a carboxy group of a binder resin (Ib) having carboxy groups,
wherein the overcoat liquid contains the binder resin (Ib) having carboxy groups, and
wherein a surface tension y(B) of the overcoat liquid is greater than a surface tension y(A) of the water-based ink.

[3] An inkjet printing method using the inkjet printing ink set according to [1] or [2] above, the inkjet printing method including the following Step 1 and Step 2:

Step 1: After applying the water-based ink to a heat-shrinkable resin film substrate using an inkjet ejection method, applying the overcoat liquid to the area where the water-based ink was applied using an inkjet ejection method; and
Step 2: Heating a coating of the water-based ink and a coating of the overcoat liquid formed on the printing substrate in Step 1.

[4] A packaging method including: disposing a printed material obtained using the inkjet printing method according to [3] above around an object to be packaged and then shrinking the heat-shrinkable resin film substrate of the printed material to obtain a package.

According to the present invention, it is possible to provide an inkjet printing ink set, an inkjet printing method, and a packaging method that provide a heat-shrunk printed material having excellent scratch resistance and water resistance when printing on a heat-shrinkable resin film.

[Ink Set for Inkjet Recording]

The ink set for inkjet recording according to the present invention (also simply referred to as "ink set" hereinafter) includes: a water-based ink containing a pigment (also simply referred to as "water-based ink" or "ink" hereinafter); and an overcoat liquid substantially free of pigment (also simply referred to as "overcoat liquid" hereinafter), and the water-based ink contains a binder resin (Ib) having carboxy groups, the overcoat liquid contains a compound (II) having a reactive group capable of cross-linking with the carboxy group of the binder resin (Ib), and the surface tension y(B) of the overcoat liquid is greater than the surface tension y(A) of the water-based ink.

In the present invention, "water-based" for the water-based ink means that water occupies the largest proportion by mass in the medium contained in the water-based ink.

Also, in this specification, "low-absorbency" for the low-absorbency printing substrate is a concept that encompasses both low absorbency and non-absorbency, meaning that the amount of water absorbed by the printing substrate is 0 g/m$^2$ or more and 10 g/m$^2$ or less during 100 milliseconds of contact between the printing substrate and pure water. The amount of water absorbed can be measured using the methods described in "Examples". In addition, "printing" is a concept that encompasses printing and imprinting to record characters and images, and "printed material" is a concept that encompasses printed material and imprinted material on which characters and images are recorded.

According to the present invention, it is possible to provide a heat-shrunk printed material having excellent scratch resistance and water resistance when printing on a heat-shrinkable resin film. Although the reason is not certain, it is thought to be as follows.

In the present invention, the surface tension of the overcoat liquid is greater than the surface tension of the water-based ink. Therefore, when the water-based ink is applied to a printing substrate and then the overcoat liquid is applied to the area where the water-based ink has been applied, convection (so-called Marangoni convection) occurs between the water-based ink coating and the overcoat liquid coating on the printing substrate using the gradient of the surface tension as a driving force. As a result, the compound (II) having a reactive group contained in the overcoat liquid coating is distributed more uniformly in the water-based ink coating than in the case of diffusion based on the difference in the concentration of the compound (II) between the water-based ink coating and the overcoat liquid coating on the printing

substrate, and a uniform cross-linking reaction between the carboxy group of the binder resin (Ib) contained in the water-based ink coating and the reactive group of the compound (II) is promoted, and the resulting printed coating is less likely to have a distribution in strength, making it possible to obtain a printed material having the printed coating with uniform strength. Even when such a printed material is thermally shrunk, it is conceivable that selective shrinkage does not occur in portions of the printed coating that are weaker in strength, and the occurrence of fine cracks and wrinkles in the printed coating can be reduced. As a result, it is presumed that embrittlement of the printed coating is suppressed, and scratch resistance and water resistance are improved.

Hereinafter, the scratch resistance and water resistance of heat-shrunk printed materials are also simply referred to as "scratch resistance" and "water resistance", respectively.

In the present invention, the surface tension $\gamma(B)$ of the overcoat liquid (simply referred to as "surface tension $\gamma(B)$" hereinafter) is greater than the surface tension $\gamma(A)$ of the water-based ink (simply referred to as "surface tension $\gamma(A)$" hereinafter).

From the viewpoint of improving scratch resistance and water resistance, the difference $\Delta\gamma$ between the surface tension $\gamma(B)$ of the overcoat liquid and the surface tension y(A) of the water-based ink is preferably 1 mN/m or more, more preferably 1.5 nm/m or more, even more preferably 2 mN/m or more, still more preferably 3 mN/m or more, still more preferably 5 mN/m or more, and still more preferably 7 mN/m or more, and from the same viewpoint as above, it is preferably 20 mN/m or less, more preferably 17 mN/m or less, and even more preferably 15 mN/m or less. The surface tension y(A) of the water-based ink and the surface tension y(B) of the overcoat liquid are measured using the methods described in "Examples".

<Water-Based Ink>

A water-based ink according to the present invention contains a pigment and a binder resin (Ib) having carboxy groups. A water-based ink having one color can be used alone, or two or more water-based inks having different colors can be used in combination. That is, the printed image formed by the water-based ink according to the present invention may be a multi-color print, for example, a three-color print, a four-color print, or a print using inks having four or more different colors.

(Pigment)

The pigment used in the present invention may be either an inorganic pigment or an organic pigment, and lake pigments and fluorescent pigments may also be used. If necessary, they can also be used in combination with extender pigments.

Specific examples of inorganic pigments include carbon black, metal oxides such as titanium oxide, iron oxide, red iron oxide, and chromium oxide, and pearlescent pigments. Carbon black is preferable, especially in black ink. Examples of carbon black include furnace black, lamp black, acetylene black, and channel black.

Specific examples of organic pigments include azo pigments such as azo lake pigments, insoluble monoazo pigments, insoluble disazo pigments, and chelate azo pigments; and polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, and threne pigments.

In the achromatic ink, achromatic pigments such as white, black, and gray pigments can be used, while in the chromatic ink, chromatic pigments such as yellow, magenta, cyan, blue, red, orange, and green pigments can be used.

Specific examples of preferable organic pigments include pigments with one or more products of respective numbers selected from C.I. Pigment Yellow, C.I. Pigment Red, C.I. Pigment Orange, C.I. Pigment Violet, C.I. Pigment Blue, and C.I. Pigment Green.

Examples of extender pigments include silica, calcium carbonate, and talc.

The above pigments can be used alone or in a combination of two or more.

The pigment is dispersed in a medium in the water-based ink according to the present invention. The form of the pigment in the water-based ink according to the present invention may be a form in which the pigment is dispersed using a resin (also referred to as a "pigment dispersing resin" hereinafter) or a surfactant as a dispersant, or a self-dispersing form in which the pigment is dispersed without using a dispersant. In particular, the form of the pigment in the water-based ink according to the present invention is preferably a form in which the pigment is dispersed using the pigment dispersing resin (also referred to as a "pigment dispersing resin (Ia)" hereinafter), and more preferably the form of resin particles containing the pigment (also referred to as "pigment-containing resin particles" hereinafter). The form of the pigment-containing resin particles is not particularly limited as long as the particles are formed from at least a pigment and a pigment dispersing resin (Ia), and the particles are formed due to the pigment dispersing resin (Ia) adsorbed on the pigment in the water-based ink. Examples of the form of the pigment-containing resin particles include a particle form in which the pigment is encapsulated

in the pigment dispersing resin (Ia), a particle form in which the pigment is uniformly dispersed in the pigment dispersing resin (Ia), and a particle form in which the pigment is exposed on the particle surface of the pigment dispersing resin (Ia), as well as mixtures thereof.

(Pigment Dispersing Resin (Ia))

The pigment dispersing resin (Ia) may be either a water-soluble resin or a water-insoluble resin.

Here, whether the resin is "water-soluble" or "water-insoluble" is determined as follows. When dried at 105°C for 2 hours to reach constant weight and then dissolved in 100 g of water at 25°C until saturation is reached, a resin with an amount dissolved of more than 10 g is determined to be "water-soluble", and a resin with an amount dissolved of 10 g or less is determined to be "water-insoluble". If the pigment dispersing resin (Ia) has an anionic group as described below and the anionic group is neutralized with a neutralizing agent, it is determined based on the amount dissolved as measured in a state in which the neutralizing agent is present under conditions where the mass ratio between the pigment dispersing resin (Ia) and the neutralizing agent is the same as that in the water-based ink according to the present invention.

Examples of the pigment dispersing resin (Ia) include vinyl-based resins obtained by addition polymerization of vinyl monomers (vinyl compounds, vinylidene compounds, vinylene compounds); and condensation resins such as polyester resins and polyurethane resins. The pigment dispersing resin (Ia) may be an appropriately synthesized material or a commercially available product. In particular, the pigment dispersing resin (Ia) is preferably a vinyl-based resin (also referred to as "vinyl-based resin (Ia-1)" hereinafter) from the viewpoint of improving scratch resistance and water resistance.

From the viewpoint of improving the dispersion stability of the pigment, the vinyl-based resin (Ia-1) preferably contains a constitutional unit derived from an anionic group-containing monomer. In this specification, "anionic group" refers to an anion group or a group that can become an anion group upon ionization. Examples of the anionic group include a carboxy group (-COOM), a sulfonic acid group ($-SO_3M$), and a phosphate group ($-OPO_3M_2$). In the chemical formulas above, M represents a hydrogen atom, an alkali metal, ammonium, or an organic ammonium.

Examples of the vinyl-based resin (Ia-1) include a homopolymer of an anionic group-containing monomer, a copolymer of an anionic group-containing monomer and a hydrophobic monomer, and a copolymer of an anionic group-containing monomer, a hydrophobic monomer, and a nonionic monomer. When the vinyl-based resin (Ia-1) is a copolymer, it may be any of a random copolymer, a block copolymer, an alternating copolymer, and a graft copolymer.

In this specification, "hydrophobic" for a hydrophobic monomer means that when the monomer is dissolved in 100 g of ion-exchanged water at 25°C until saturated, the amount of the dissolved monomer is less than 10 g.

In addition, the nonionic monomer is a monomer that has a high affinity with water or a water-soluble organic solvent, and is, for example, a monomer containing a hydroxy group or a polyalkylene glycol chain.

Examples of the anionic group-containing monomer include a carboxy group-containing monomer, a sulfonic acid group-containing monomer, and a phosphate group-containing monomer. Among these, from the viewpoint of improving the dispersion stability of the pigment and from the viewpoint of availability, carboxy group-containing monomers are preferable, and (meth)acrylic acid is more preferable.

Examples of hydrophobic monomers include a (meth)acrylate having a hydrocarbon group derived from an aliphatic alcohol with 1 to 22 carbon atoms; aromatic group-containing monomers such as styrene-based monomers and aromatic group-containing (meth)acrylates; and styrene-based macromonomers. The molecular weight of the aromatic group-containing monomer, preferably a styrene-based monomer, is preferably less than 500. The styrene-based macromonomer is a compound having a polymerizable functional group at one end and a number average molecular weight of 500 or more and 100,000 or less. Among these, from the viewpoint of improving the dispersion stability of the pigment, the hydrophobic monomer is preferably a styrene-based monomer, more preferably one or more selected from the group consisting of styrene, $\alpha$-methylstyrene, 2-methylstyrene, vinyltoluene, and divinylbenzene, and even more preferably one or more selected from the group consisting of styrene and $\alpha$-methylstyrene.

Examples of nonionic monomers include polyalkylene glycol mono(meth)acrylates such as polyethylene glycol mono(meth)acrylate; and alkoxypolyalkylene glycol mono(meth)acrylates such as methoxypolyethylene glycol mono(meth)acrylate and octoxypolyethylene glycol mono(meth)acrylate.

Note that "(meth)acrylic acid" refers to at least one selected from the group consisting of acrylic acid and methacrylic acid. In addition, "(meth)acrylate" refers to at least one selected from the group consisting of an acrylate and a methacrylate.

The monomers of the vinyl-based resin (Ia-1) can be used alone or in a combination of two or more.

When the vinyl-based resin (Ia-1) is a copolymer, from the viewpoint of improving the dispersion stability of the pigment, the vinyl-based resin (Ia-1) preferably contains a constitutional unit derived from one or more anionic group-containing monomers selected from the group consisting of acrylic acid and methacrylic acid, and a constitutional unit derived from one or more hydrophobic monomers selected from the group consisting of a (meth)acrylate having a hydrocarbon group derived from an aliphatic alcohol with 1 to 22 carbon atoms, an aromatic group-containing monomer,

and a styrene-based macromer, more preferably contains a constitutional unit derived from one or more anionic group-containing monomers selected from the group consisting of acrylic acid and methacrylic acid, and a constitutional unit derived from one or more hydrophobic monomers selected from the group consisting of a (meth)acrylate having a hydrocarbon group derived from an aliphatic alcohol with 1 to 22 carbon atoms and an aromatic group-containing monomer, even more preferably a constitutional unit derived from one or more anionic group-containing monomers selected from the group consisting of acrylic acid and methacrylic acid, and a constitutional unit derived from an aromatic group-containing monomer, and still more preferably a constitutional unit derived from one or more anionic group-containing monomers selected from the group consisting of acrylic acid and methacrylic acid, and a constitutional unit derived from a styrene-based monomer.

When the vinyl-based resin (Ia-1) is a copolymer of an anionic group-containing monomer and a hydrophobic monomer, or a copolymer of an anionic group-containing monomer, a hydrophobic monomer, and a nonionic monomer, the content of the constitutional units derived from the monomer components in the vinyl-based resin (Ia-1) is as follows.

From the viewpoint of improving the dispersion stability of the pigment, the content of the constitutional unit derived from the anionic group-containing monomer in the vinyl-based resin (Ia-1) is preferably 10% by mass or more, more preferably 15% by mass or more, and even more preferably 20% by mass or more, and from the same viewpoint as above, is preferably 60% by mass or less, more preferably 50% by mass or less, and even more preferably 40% by mass or less.

From the viewpoint of improving the dispersion stability of the pigment, the content of the constitutional unit derived from the hydrophobic monomer in the vinyl-based resin (Ia-1) is preferably 40% by mass or more, more preferably 50% by mass or more, and even more preferably 60% by mass or more, and from the same viewpoint as above, is preferably 90% by mass or less, more preferably 85% by mass or less, and even more preferably 80% by mass or less.

When the vinyl-based resin (Ia-1) contains a constitutional unit derived from a nonionic monomer, the content of the constitutional unit derived from the nonionic monomer in the vinyl-based resin is preferably 20% by mass or less, more preferably 10% by mass or less, and even more preferably 5% by mass or less, from the viewpoint of improving the dispersion stability of the pigment.

The vinyl-based resin (Ia-1) can be obtained, for example, by addition polymerization of raw material monomers including an anionic group-containing monomer, a hydrophobic monomer, or a nonionic monomer, using a known method.

The pigment dispersing resin (Ia) may have a cross-linked structure. In this case, from the viewpoint of improving the dispersion stability of the pigment, the pigment dispersing resin (Ia) preferably has a structure containing a constituent component of a polymer having a linear two-dimensional structure that may have a branched chain, and a constituent component derived from a cross-linking agent. This type of cross-linked structure is considered to be a three-dimensional structure formed by the polymer having a linear two-dimensional structure, which may include a branched chain, due to the constituent component derived from a cross-linking agent. Examples of the polymer having a linear two-dimensional structure that may have a branched chain include vinyl-based resins obtained by addition polymerization of vinyl monomers (vinyl compounds, vinylidene compounds, vinylene compounds); and condensation resins such as polyester resins and polyurethane resins, and the vinyl-based resin (Ia-1) described above is preferable.

From the viewpoint of improving the dispersion stability of the pigment, the cross-linking agent is preferably a polyfunctional epoxy compound having two or more epoxy groups per molecule, more preferably a polyglycidyl ether compound of a polyhydric alcohol having a hydrocarbon group with 3 to 8 carbon atoms, even more preferably one or more selected from the group consisting of trimethylolpropane polyglycidyl ether, pentaerythritol polyglycidyl ether, neopentyl glycol diglycidyl ether, 1,6-hexanediol diglycidyl ether, 1,4-butanediol diglycidyl ether, 1,4-cyclohexanedimethanol diglycidyl ether, and diethylene glycol diglycidyl ether, and even more preferably trimethylolpropane polyglycidyl ether.

When the cross-linking agent is a polyfunctional epoxy compound, the epoxy group equivalent amount of the cross-linking agent is preferably 90 or more, more preferably 100 or more, and even more preferably 110 or more, and is preferably 300 or less, more preferably 200 or less, and even more preferably 150 or less from the viewpoint of improving the dispersion stability of the pigment.

From the viewpoint of improving the dispersion stability of the pigment, the acid value of the pigment dispersing resin (Ia) is preferably 5 mgKOH/g or more, more preferably 50 mgKOH/g or more, and even more preferably 100 mgKOH/g or more, and from the same viewpoint as above, is preferably 800 mgKOH/g or less. The acid value of the pigment dispersing resin (Ia) can be determined using the method described in "Examples", and can also be calculated from the mass ratio of the constituent monomers. The acid value of the pigment dispersing resin (Ia) having a cross-linked structure can also be determined through calculation using the following formula.

Acid value (mgKOH/g) of pigment dispersing resin (Ia) having cross-linked structure = [Acid value (mgKOH/g) of pigment dispersing resin (Ia) before cross-linking × [(100 - cross-linking degree (mol%))/100]

In this specification, the cross-linking degree (mol%) of the pigment dispersing resin (Ia) having a cross-linked

structure is an apparent cross-linking degree calculated from the acid value of the pigment dispersing resin (Ia) before cross-linking and the equivalent amount of the cross-linkable functional group of the cross-linking agent.

From the viewpoint of the dispersion stability of the pigment, the number average molecular weight of the pigment dispersing resin (Ia) is preferably 3,000 or more, more preferably 4,000 or more, and even more preferably 5,000 or more, and from the same viewpoint as above, is preferably 100,000 or less, more preferably 50,000 or less, and even more preferably 30,000 or less. The number average molecular weight of the pigment dispersing resin (Ia) is measured using the method described in "Examples".

From the viewpoint of pigment dispersion stability, the weight average molecular weight of the pigment dispersing resin (Ia) is preferably 3,000 or more, more preferably 4,000 or more, and even more preferably 5,000 or more, and from the same viewpoint as above, is preferably 100,000 or less, more preferably 80,000 or less, and even more preferably 60,000 or less. The weight average molecular weight of the pigment dispersing resin (Ia) is measured using the method described in "Examples".

Examples of commercially available pigment dispersing resins (Ia) include polyacrylic acids such as "Aron AC-10SL" (manufactured by Toagosei Co., Ltd.); and styrene/acrylic resins such as "Joncryl 67", "Joncryl 611", "Joncryl 678", "Joncryl 680", "Joncryl 690", and "Joncryl 819" (all are manufactured by BASF Japan Ltd.).

When the pigment in the water-based ink according to the present invention is in the form of pigment-containing resin particles, the pigment-containing resin particles can be obtained as an aqueous dispersion by dispersing the pigment, the pigment dispersing resin (Ia), and, if necessary, a neutralizing agent, a surfactant, and the like, using a known method.

When the pigment is blended in the water-based ink as an aqueous dispersion of pigment-containing resin particles, the average particle size of the pigment-containing resin particles in the aqueous dispersion is preferably 30 nm or more, more preferably 50 nm or more, and even more preferably 70 nm or more, from the viewpoint of the ejection properties and storage stability of the water-based ink, as well as the scratch resistance and water resistance, and from the same viewpoint as above, is preferably 600 nm or less, more preferably 550 nm or less, even more preferably 500 nm or less, and still more preferably 450 nm or less. The average particle size of the pigment-containing resin particles in the aqueous dispersion is measured using the method described in "Examples".

(Binder Resin (Ib))

From the viewpoint of improving scratch resistance and water resistance, the water-based ink according to the present invention contains a binder resin (Ib) having carboxy groups (-COOM) (simply referred to as "binder resin (Ib)" hereinafter). The carboxy group may be a group that exhibits acidity through dissociation to release a hydrogen ion, or a dissociated ionic form (-COO-). In the chemical formula, M represents a hydrogen atom, an alkali metal, ammonium, or an organic ammonium, similar to the anionic group.

From the viewpoint of improving scratch resistance and water resistance, the acid value of the binder resin (Ib) is preferably 3 mgKOH/g or more, more preferably 5 mgKOH/g or more, and even more preferably 10 mgKOH/g or more, and from the same viewpoint as above, is preferably 30 mgKOH/g or less, more preferably 25 mgKOH/g or less, and even more preferably 20 mgKOH/g or less. The acid value of the binder resin (Ib) can be determined using the method described in "Examples", and can also be calculated from the mass ratio of the constituent monomers.

Examples of the polymer backbone of the binder resin (Ib) include vinyl-based resins such as (meth)acrylic resins, styrene-based resins, styrene/(meth)acrylic resins, butadiene-based resins, styrene/butadiene-based resins, vinyl chloride-based resins, vinyl acetate-based resins, and acrylic silicone-based resins; polyurethane resins; and polyester resins. Note that "(meth)acrylic" refers to acrylic and methacrylic. When the binder resin (Ib) is a copolymer, it may be any of a random copolymer, a block copolymer, an alternating copolymer, and a graft copolymer.

In particular, from the viewpoint of improving scratch resistance and water resistance, the binder resin (Ib) is preferably one or more selected from the group consisting of a vinyl-based resin having carboxy groups, a polyurethane resin having carboxy groups, and a polyester resin having carboxy groups, and more preferably one or more selected from the group consisting of a vinyl-based resin having carboxy groups and a polyurethane resin having carboxy groups.

The vinyl-based resin having carboxy groups (also referred to as "vinyl-based resin (Ib-1)" hereinafter) used in the present invention preferably contains a constitutional unit derived from a carboxy group-containing monomer and a constitutional unit derived from a hydrophobic monomer, from the viewpoint of improving scratch resistance and water resistance.

From the viewpoint of improving scratch resistance and water resistance and from the viewpoint of availability, (meth)acrylic acid is preferable as the carboxy group-containing monomer.

Preferred examples of the hydrophobic monomer include monomers given as examples for the pigment dispersing resin (Ia) described above. Among these, from the viewpoint of improving scratch resistance and water resistance, the hydrophobic monomer is preferably one or more selected from the group consisting of a (meth)acrylate having a hydrocarbon group derived from an aliphatic alcohol with 1 to 22 carbon atoms, an aromatic group-containing

monomer, and a styrene-based macromer, more preferably one or more selected from the group consisting of a (meth) acrylate having a hydrocarbon group derived from an aliphatic alcohol with 1 to 22 carbon atoms and an aromatic group-containing monomer, even more preferably a (meth)acrylate having a hydrocarbon group derived from an aliphatic alcohol with 1 to 22 carbon atoms, still more preferably a (meth)acrylate having an alkyl group with 1 to 12 carbon atoms, and still more preferably a (meth)acrylate having an alkyl group with 1 to 8 carbon atoms.

The monomers of the vinyl-based resin (Ib-1) can be used alone or in a combination of two or more.

From the viewpoint of improving scratch resistance and water resistance, the vinyl-based resin (Ib-1) preferably contains a constitutional unit derived from one or more carboxy group-containing monomers selected from the group consisting of acrylic acid and methacrylic acid, and a constitutional unit derived from one or more hydrophobic monomers selected from the group consisting of a (meth)acrylate having a hydrocarbon group derived from an aliphatic alcohol with 1 to 22 carbon atoms, an aromatic group-containing monomer, and a styrene-based macromer, more preferably contains a constitutional unit derived from one or more carboxy group-containing monomers selected from the group consisting of acrylic acid and methacrylic acid, and a constitutional unit derived from one or more hydrophobic monomers selected from the group consisting of a (meth)acrylate having a hydrocarbon group derived from an aliphatic alcohol with 1 to 22 carbon atoms and an aromatic group-containing monomer, and even more preferably is a (meth)acrylic resin containing a constitutional unit derived from one or more carboxy group-containing monomers selected from the group consisting of acrylic acid and methacrylic acid, and a constitutional unit derived from a (meth)acrylate having a hydrocarbon group derived from an aliphatic alcohol with 1 to 22 carbon atoms, still more preferably a (meth)acrylic resin containing a constitutional unit derived from one or more carboxy group-containing monomers selected from the group consisting of acrylic acid and methacrylic acid and a constitutional unit derived from a (meth)acrylate having an alkyl group with 1 to 12 carbon atoms, still more preferably a (meth)acrylic resin containing a constitutional unit derived from one or more carboxy group-containing monomers selected from the group consisting of acrylic acid and methacrylic acid, and a constitutional unit derived from a (meth)acrylate having an alkyl group with 1 to 8 carbon atoms, and still more preferably a copolymer of methacrylic acid, methyl methacrylate, and 2-ethylhexyl acrylate.

When the vinyl-based resin (Ib-1) is a copolymer of a carboxy group-containing monomer and a hydrophobic monomer, the content of the constitutional units derived from the monomer components in the vinyl-based resin is as follows.

From the viewpoint of improving the scratch resistance and water resistance, the content of the constitutional unit derived from the carboxy group-containing monomer in the vinyl-based resin (Ib-1) is preferably 0.5% by mass or more, more preferably 1% by mass or more, and even more preferably 2% by mass or more, and from the same viewpoint as above, is preferably 15% by mass or less, more preferably 10% by mass or less, and even more preferably 5% by mass or less.

From the viewpoint of improving scratch resistance and water resistance, the content of the constitutional unit derived from the hydrophobic monomer in the vinyl-based resin (Ib-1) is preferably 85% by mass or more, more preferably 90% by mass or more, and even more preferably 95% by mass or more, and from the same viewpoint as above, is preferably 99.5% by mass or less, more preferably 99% by mass or less, and even more preferably 98% by mass or less.

From the viewpoint of improving scratch resistance and water resistance, the weight average molecular weight of the vinyl-based resin (Ib-1) is preferably 5,000 or more, more preferably 10,000 or more, even more preferably 30,000 or more, still more preferably 50,000 or more, still more preferably 100,000 or more, still more preferably 300,000 or more, and still more preferably 500,000 or more, and from the same viewpoint as above, is preferably 1,500,000 or less, more preferably 1,000,000 or less, and even more preferably 800,000 or less. The weight average molecular weight can be measured using the method described in "Examples".

The vinyl-based resin (Ib-1) can be produced by polymerizing a raw material monomer using a known polymerization method. Preferred examples of the polymerization method include emulsion polymerization and suspension polymerization, and emulsion polymerization is more preferable.

From the viewpoint of improving scratch resistance and water resistance, the polyurethane resin having carboxy groups (also referred to as "polyurethane resin (Ib-2)" hereinafter) used in the present invention is preferably a polyadduct of a dialkanol carboxylic acid, a prepolymer constituted by a polyisocyanate component, and an organic compound (polyol) component having two or more alcoholic hydroxyl groups per molecule.

Examples of the dialkanol carboxylic acid include dimethylolbutanoic acid and dimethylolpropionic acid, and a salt thereof. In particular, from the viewpoint of improving scratch resistance and water resistance, dimethylolpropionic acid is preferable.

The polyol component is not particularly limited as long as it is a compound having two or more alcoholic hydroxyl groups per molecule, and examples thereof include polycarbonate-based polyols, polyester-based polyols, and polyether-based polyols.

Examples of the polyisocyanate component include chain aliphatic diisocyanates such as tetramethylene diisocyanate, 1,6-hexamethylene diisocyanate, dodecamethylene diisocyanate, trimethylhexamethylene diisocyanate, and lysine diisocyanate; aliphatic diisocyanates having a cyclic structure, such as isophorone diisocyanate, hydrogenated

xylylene diisocyanate, and dicyclohexylmethane 4,4'-diisocyanate; aliphatic diisocyanates having an aromatic ring, such as xylylene diisocyanate and tetramethylxylylene diisocyanate; aromatic diisocyanates such as tolylene diisocyanate and diphenylmethane diisocyanate; and modified products of these diisocyanates (such as carbodiimide-, uretdione-, and uretoimine-containing modified products).

From the viewpoint of improving scratch resistance and water resistance, the polyurethane resin (Ib-2) is more preferably a polyadduct of a polycarbonate polyol as the polyol component, dicyclohexylmethane 4,4'-diisocyanate as the polyisocyanate component, and dimethylolpropionic acid as the dialkanol carboxylic acid.

Examples of the solvent used in the polyaddition reaction include acetone, methyl ethyl ketone, tetrahydrofuran, dioxane, ethyl acetate, toluene, and xylene. In the polyaddition reaction, a chain extender or a reaction terminator may also be used in combination, if necessary. Use of a chain extender allows further increase in molecular weight. The chain extender may be a polyol or a polyamine, and the reaction terminator may be a monoalcohol or a monoamine.

From the viewpoint of dispersion stability in the water-based ink, it is preferable that at least some of the carboxy groups of the polyurethane resin (Ib-2) are neutralized with a neutralizing agent.

Examples of the neutralizing agent include alkylamines such as butylamine and triethylamine; alkanolamines such as monoethanolamine, diethanolamine, and triethanolamine; and inorganic bases such as morpholine, ammonia, and sodium hydroxide.

The binder resin (Ib) is preferably used as pigment-free resin particles, and from the viewpoint of improving the productivity of the water-based ink, the binder resin (Ib) is preferably blended into the water-based ink as an aqueous dispersion of pigment-free polymer particles. The binder resin (Ib) used may be an appropriately synthesized material or a commercially available product.

When the binder resin (Ib) is formulated as an aqueous dispersion of pigment-free resin particles, the average particle size of the pigment-free resin particles in the aqueous dispersion is, from the viewpoint of storage stability of the ink, preferably 10 nm or more, more preferably 30 nm or more, even more preferably 50 nm or more, and still more preferably 70 nm or more, and is preferably 300 nm or less, more preferably 200 nm or less, even more preferably 150 nm or less, and still more preferably 130 nm or less. The average particle size of the pigment-free resin particles in the aqueous dispersion is measured using the method described in "Examples".

Examples of commercially available dispersions of pigment-free vinyl-based resin particles include acrylic resins such as "Neocryl A-1127" (trade name, anionic self-cross-linking water-based acrylic resin, manufactured by Covestro), "Joncryl 390", "Joncryl 7100", "Joncryl 7600", "Joncryl 537J", "Joncryl PDX-7164", "Joncryl 538J", and "Joncryl 780" (trade names, manufactured by BASF Japan Ltd.); styrene/butadiene resins such as "SR-100" and "SR102" (all of which are trade names, manufactured by Nippon A&L Inc.); and vinyl chloride-based resins such as "Vinyl Blanc 700" and "Vinyl Blanc 701" (trade names, manufactured by Nissin Chemical Industry Co., Ltd.).

Examples of commercially available dispersions of pigment-free polyurethane resin particles include "NeoRez R-9603" (trade name, manufactured by Covestro), "WBR-2018" and "WBR-2000U" (trade names, manufactured by Taisei Fine Chemical Co., Ltd.).

Examples of commercially available dispersions of pigment-free polyester resin particles include "ELITEL KA-5034", "ELITEL KA-5071S", "ELITEL KZA-1734", "ELITEL KZA-6034", "ELITEL KZA-1449", "ELITEL KZA-0134", and "ELITEL KZA-3556" (all of which are trade names, manufactured by Unitika Ltd.).

(Water-Soluble Organic Solvent)

The water-based ink according to the present invention preferably further contains a water-soluble organic solvent from the viewpoint of improving the ejection properties and storage stability of the water-based ink, and from the viewpoint of adjusting the surface tension of the water-based ink and improving the scratch resistance and water resistance. Water-soluble organic solvents may be used alone or in combination of two or more.

In the present invention, "water-soluble organic solvent" refers to an organic solvent with an amount dissolved of 10 mL or more when the organic solvent is dissolved in 100 mL of water at 25°C.

The boiling point of the water-soluble organic solvent under atmospheric pressure is preferably 150°C or higher, more preferably 160°C or higher, even more preferably 170°C or higher, and preferably 350°C or lower, more preferably 300°C or lower, and even more preferably 250°C or lower.

When two or more water-soluble organic solvents are used in combination as the water-soluble organic solvent, the boiling point of the water-soluble organic solvent is a weighted average value based on the content (% by mass) of each water-soluble organic solvent.

Examples of the water-soluble organic solvent include polyhydric alcohols, polyhydric alcohol alkyl ethers, nitrogen-containing heterocyclic compounds, amides, amines, and sulfur-containing compounds. Among these, from the viewpoint of improving the ejection properties and storage stability of the water-based ink, and from the viewpoint of adjusting the surface tension of the water-based ink and improving the scratch resistance and water resistance, it is preferable to use one or more selected from the group consisting of a polyhydric alcohol and a polyhydric alcohol alkyl

ether.

A plurality of polyhydric alcohols within the concept of polyhydric alcohols can be mixed and used. In addition, similarly to the polyhydric alcohols, a plurality of polyhydric alcohol alkyl ethers within the concept of polyhydric alcohol alkyl ethers can also be mixed and used.

Examples of polyhydric alcohols include ethylene glycol, propylene glycol, dipropylene glycol, polypropylene glycol, 1,3-propanediol, 2-methyl-1,3-propanediol, 1,2-butanediol, 1,3-butanediol, 1,4-butanediol, 3-methyl-1,3-butanediol, 1,5-pentanediol, 2-methyl-2,4-pentanediol, 1,2,6-hexanetriol, 1,2,4-butanetriol, 1,2,3-butanetriol, and petriol (3-methylpentane-1,3,5-triol).

Examples of polyhydric alcohol alkyl ethers include alkylene glycol monoalkyl ethers, dialkylene glycol monoalkyl ethers, and trialkylene glycol monoalkyl ethers. Specific examples thereof include ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, triethylene glycol monomethyl ether, triethylene glycol monoethyl ether, triethylene glycol monobutyl ether, triethylene glycol monoisobutyl ether, tetraethylene glycol monomethyl ether, tetraethylene glycol monoethyl ether, propylene glycol monoethyl ether, dipropylene glycol monomethyl ether, dipropylene glycol monoethyl ether, dipropylene glycol monobutyl ether, tripropylene glycol monomethyl ether, tripropylene glycol monoethyl ether, and tripropylene glycol monobutyl ether.

(Surfactant)

The water-based ink according to the present invention preferably further contains a surfactant, from the viewpoint of adjusting the surface tension of the water-based ink and improving the scratch resistance and water resistance.

The surfactant can be selected as appropriate and used within a range in which the relationship between the surface tension y(A) of the water-based ink and the surface tension y(B) of the overcoat liquid is satisfied.

Examples of the surfactant include nonionic surfactants, anionic surfactants, and amphoteric surfactants, and nonionic surfactants are preferable.

The surfactants may be used alone or in combination of two or more.

Examples of the nonionic surfactants include acetylene-based surfactants, polyoxyalkylene alkyl ether surfactants, polyhydric alcohol surfactants, fatty acid alkanolamides, silicone-based surfactants, and fluorine-based surfactants.

In particular, the surfactant is preferably one or more selected from the group consisting of an acetylene-based surfactant and a silicone-based surfactant, from the viewpoint of adjusting the surface tension of the water-based ink and improving the scratch resistance and water resistance.

From the viewpoint of adjusting the surface tension of the water-based ink and improving the scratch resistance and water resistance, preferred examples of the acetylene-based surfactant include 2,4,7,9-tetramethyl-5-decyne-4,7-diol, 2,5,8,11-tetramethyl-6-dodecyne-5,8-diol, 3,6-dimethyl-4-octyne-3,6-diol, 3,5-dimethyl-1-hexyn-3-ol, 2,4-dimethyl-5-hexyn-3-ol, and ethylene oxide (hereinafter also referred to as "EO") adducts thereof. Among these, a more preferred example thereof is one or more selected from the group consisting of 2,4,7,9-tetramethyl-5-decyne-4,7-diol and an EO adduct of 2,4,7,9-tetramethyl-5-decyne-4,7-diol, and an even more preferred example thereof is an EO adduct of 2,4,7,9-tetramethyl-5-decyne-4,7-diol.

From the viewpoint of adjusting the surface tension of the water-based ink and improving scratch resistance and water resistance, the average number of moles of ethylene oxide added in the acetylene-based surfactant (also referred to as "average number of moles of EO added" hereinafter) is preferably 1 mole or more, more preferably 2 moles or more, and even more preferably 3 moles or more, and from the same viewpoint as above, is preferably 35 moles or less, more preferably 30 moles or less, even more preferably 25 moles or less, still more preferably 20 moles or less, still more preferably 15 moles or less, still more preferably 10 moles or less, and still more preferably 5 moles or less.

From the viewpoint of adjusting the surface tension of the water-based ink and improving the scratch resistance and water resistance, the HLB value of the acetylene-based surfactant is preferably 1 or more, more preferably 2 or more, even more preferably 3 or more, and still more preferably 7 or more, and from the same viewpoint as above, is preferably 18 or less, more preferably 15 or less, and even more preferably 10 or less.

In the present invention, the HLB value is a value that indicates the affinity of a surfactant to water and oil as the hydrophile-Lipophile balance, and can be calculated using the Griffin’s method using the following formula. The catalog values for each product can also be referred to.

HLB value = 20×[(total formula weight of hydrophilic groups contained in surfactant)/(molecular weight of surfactant)]

Examples of the hydrophilic groups contained in the surfactant include a hydroxy group and an ethyleneoxy group.

Examples of commercially available acetylene-based surfactants include SURFYNOL 104PG-50 (50% propylene glycol diluted product of 2,4,7,9-tetramethyl-5-decyne-4,7-diol), SURFYNOL 420 (EO adduct of 2,4,7,9-tetramethyl-5-decyne-4,7-diol (average number of moles of EO added: 1), HLB value: 4 (catalog value)), and SURFYNOL 440 (EO adduct of 2,4,7,9-tetramethyl-5-decyne-4,7-diol (average number of moles of EO added: 3.5), HLB value: 8 (catalog value)), SURFYNOL 465 (EO adduct of 2,4,7,9-tetramethyl-5-decyne-4,7-diol (average number of moles of EO added: 10), HLB value: 13 (catalog value)), and SURFYNOL 485 (EO adduct of 2,4,7,9-tetramethyl-5-decyne-4,7-diol (average number of moles of EO added: 30), HLB value: 17 (catalog value)).

From the viewpoint of adjusting the surface tension of the water-based ink and improving the scratch resistance and water resistance, a polyether-modified silicone-based surfactant is preferable as the silicone-based surfactant.

Preferable examples of the polyether group of the polyether-modified silicone-based surfactant include a polyethyleneoxy group, a polypropyleneoxy group, and a polyalkyleneoxy group formed by block or random addition of an ethyleneoxy group and a propyleneoxy group (trimethyleneoxy group or propane-1,2-diyloxy group), and it is possible to use a compound in which a polyether group is grafted onto the silicone main chain and a compound in which polyether groups are block-bonded to both terminal ends of the silicone main chain.

From the viewpoint of adjusting the surface tension of the water-based ink and improving the scratch resistance and water resistance, the HLB value of the polyether-modified silicone-based surfactant is preferably 2 or more, more preferably 6 or more, and even more preferably 10 or more, and from the same viewpoint as above, is preferably 18 or less, more preferably 17 or less, and even more preferably 16 or less.

Specific examples of polyether-modified silicone-based surfactants include PEG-3 dimethicone, PEG-9 dimethicone, PEG-9 methyl ether dimethicone, PEG-10 dimethicone, PEG-11 methyl ether dimethicone, PEG/PPG-20/22 butyl ether dimethicone, PEG-32 methyl ether dimethicone, PEG-9 polydimethylsiloxyethyl dimethicone, and lauryl PEG-9 polydimethylsiloxyethyl dimethicone.

Examples of commercially available polyether-modified silicone-based surfactants include the "KF" series manufactured by Shin-Etsu Chemical Co., Ltd., the "SILFACE SAG" series manufactured by Nissin Chemical Industry Co., Ltd., and the "BYK" series manufactured by BYK Japan KK.

(Water)

The water-based ink according to the present invention contains water.

The water used in the water-based ink according to the present invention is preferably pure water or ion-exchanged water, from the viewpoint of preventing the inclusion of unintended substances.

The water-based ink according to the present invention may further contain various additives as optional components, such as a humectant, a wetting agent, a penetrant, a dispersant, a viscosity modifier, an antifoaming agent, a preservative, an antifungal agent, and an antirust agent.

The water-based ink can be obtained by mixing and stirring a pigment, a binder resin (Ib), water, and if necessary, a pigment dispersing resin (Ia), a neutralizing agent, a surfactant, a water-soluble organic solvent, and the like.

When pigment-containing resin particles are contained, as described above, it is preferable that the pigment, the pigment dispersing resin (Ia), and, if necessary, a neutralizing agent, a surfactant, and the like are dispersed using a known method to obtain an aqueous dispersion of the pigment-containing resin particles, and then the resulting dispersion is blended into the water-based ink.

(Composition of Water-Based Ink)

From the viewpoint of image density, the pigment content in the water-based ink according to the present invention is preferably 3% by mass or more, more preferably 4% by mass or more, and even more preferably 5% by mass or more, and from the viewpoint of scratch resistance and water resistance, is preferably 20% by mass or less, more preferably 15% by mass or less, and even more preferably 13% by mass or less.

When the pigment in the water-based ink according to the present invention is in a form in which the pigment is dispersed using the pigment dispersing resin (Ia), from the viewpoint of improving the dispersion stability of the pigment, the content of the pigment dispersing resin (Ia) in the water-based ink according to the present invention is preferably 0.10% by mass or more, more preferably 0.15% by mass or more, and even more preferably 0.20% by mass or more, and from the same viewpoint as above, is preferably 10% by mass or less, more preferably 7% by mass or less, and even more preferably 5% by mass or less.

When the pigment in the water-based ink according to the present invention is in a form in which the pigment is dispersed using the pigment dispersing resin (Ia), from the viewpoint of improving the dispersion stability of the pigment, a mass ratio of the content of the pigment to a total content of the pigment and the pigment dispersing resin (Ia) in the water-based ink according to the present invention [pigment/(pigment + pigment dispersing resin (Ia))] is preferably 0.5 or more, more preferably 0.6 or more, even more preferably 0.65 or more, and still more preferably 0.7 or more, and from the same

viewpoint as above, is preferably 0.99 or less, and more preferably 0.98 or less.

From the viewpoint of improving scratch resistance and water resistance, the content of the binder resin (Ib) in the water-based ink according to the present invention is preferably 1% by mass or more, more preferably 3% by mass or more, and even more preferably 5% by mass or more, and from the same viewpoint as above, is preferably 15% by mass or less, more preferably 10% by mass or less, and even more preferably 7% by mass or less.

From the viewpoint of scratch resistance and water resistance, the water content in the water-based ink according to the present invention is preferably 35% by mass or more, more preferably 40% by mass or more, and even more preferably 45% by mass or more, and from the same viewpoint as above, is preferably 65% by mass or less, more preferably 60% by mass or less, and even more preferably 55% by mass or less.

When the water-based ink according to the present invention further contains a water-soluble organic solvent, from the viewpoint of improving the ejection properties and storage stability of the water-based ink, and from the viewpoint of adjusting the surface tension of the water-based ink and improving the scratch resistance and water resistance, the content of the water-soluble organic solvent in the water-based ink according to the present invention is preferably 5% by mass or more, more preferably 10% by mass or more, and even more preferably 20% by mass or more, and is preferably 60% by mass or less, more preferably 50% by mass or less, and even more preferably 40% by mass or less.

When the water-based ink according to the present invention further contains a surfactant, the content of the surfactant in the water-based ink according to the present invention is, from the viewpoint of adjusting the surface tension of the water-based ink and improving the scratch resistance and water resistance, preferably 0.5% by mass or more, more preferably 1.0% by mass or more, and even more preferably 1.5% by mass or more, and from the same viewpoint as above, is preferably 5% by mass or less, more preferably 4% by mass or less, and even more preferably 3% by mass or less.

(Physical Properties of Water-Based Ink)

From the viewpoint of improving scratch resistance and water resistance and from the viewpoint of improving image quality, the surface tension y(A) of the water-based ink according to the present invention is preferably 22 mN/m or more, more preferably 23 mN/m or more, even more preferably 24 mN/m or more, and still more preferably 25 nm/m or more, and from the same viewpoints as above, is preferably 30 mN/m or less, more preferably 29 mN/m or less, even more preferably 28 mN/m or less, and still more preferably 27 mN/m or less. The surface tension is measured using the method described in "Examples".

From the viewpoint of ejection stability and dispersion stability, the viscosity of the water-based ink according to the present invention at 32°C is preferably 2 mPa·s or more, more preferably 3 mPa·s or more, and even more preferably 4 mPa·s or more, and is preferably 12 mPa·s or less, more preferably 9 mPa ·s or less, and even more preferably 7 mPa·s or less. The viscosity is measured using the method described in "Examples".

The pH of the water-based ink according to the present invention is preferably 7.0 or higher, more preferably 7.2 or higher, and even more preferably 7.5 or higher. In addition, from the viewpoint of the resistance of members and skin irritation, the pH is preferably 11 or less, more preferably 10 or less, and even more preferably 9.5 or less. The pH is measured using the method described in "Examples".

When two or more water-based inks having different colors are used in combination, there may be a difference in surface tension between the water-based inks.

In this case, the difference $\Delta\gamma$ between the surface tension y(B) of the overcoat liquid and the surface tension y(A) of the water-based ink is preferably greater than the surface tension between the water-based inks, from the viewpoint of improving scratch resistance and water resistance. More specifically, the difference $\Delta\gamma$ between the surface tension y(B) of the overcoat liquid and the surface tension y(A) of the water-based ink is greater than the surface tension between the water-based inks, by preferably 0.5 mN/m or more, more preferably 1.0 mN/m or more, and even more preferably 1.5 mN/m or more.

<Overcoat Liquid>

The overcoat liquid according to the present invention is substantially free of pigment and contains a compound (II) having a reactive group capable of cross-linking with a carboxy group of the binder resin (Ib) (also simply referred to as "compound (II)" hereinafter).

The overcoat liquid according to the present invention is substantially free of pigment.

Here, "substantially free of pigment" means that the pigment content in the overcoat liquid according to the present invention is preferably 1% by mass or less, more preferably 0.1% by mass or less, even more preferably 0.01% by mass or less, and still more preferably 0% by mass.

(Compound (II))

The reactive group of the compound (II) is preferably one or more selected from the group consisting of a carbodiimide group, an oxazoline group, an epoxy group, an isocyanate group, an aziridino group, and an amino group. Note that the concept of "epoxy group" includes a glycidyl group. In particular, from the viewpoint of improving scratch resistance and water resistance, the reactive group is more preferably one or more selected from the group consisting of a carbodiimide group, an oxazoline group, and an epoxy group, even more preferably one or more selected from the group consisting of a carbodiimide group and an oxazoline group, and still more preferably a carbodiimide group. That is, the compound (II) is preferably one or more compounds selected from the group consisting of a polyfunctional carbodiimide compound, a polyfunctional oxazoline compound, and a polyfunctional epoxy compound, more preferably one or more compounds selected from the group consisting of a polyfunctional carbodiimide compound and a polyfunctional oxazoline compound, and even more preferably a polyfunctional carbodiimide compound.

From the viewpoint of improving scratch resistance and water resistance, the reactive group equivalent amount of the compound (II) is preferably 100 or more, more preferably 170 or more, and even more preferably 200 or more, and from the viewpoint of compatibility with an overcoat liquid, is preferably 500 or less, more preferably 400 or less, and even more preferably 300 or less. The reactive group equivalent amount means the mass of the compound (II) per mole of reactive group.

[Polyfunctional Carbodiimide Compound]

The polyfunctional carbodiimide compound is a compound having two or more carbodiimide groups per molecule. As the polyfunctional carbodiimide compound, a polymer containing two or more carbodiimide groups (hereinafter also referred to as a "carbodiimide group-containing polymer") is preferable from the viewpoint of improving scratch resistance and water resistance.

The carbodiimide group-containing polymer is preferably obtained by, for example, blocking the terminal isocyanate groups of a condensation reaction product obtained through a decarboxylation condensation reaction of diisocyanates in the presence of a carbodiimidization catalyst, with hydrophilic groups.

Examples of diisocyanates used in the decarboxylation condensation reaction include aliphatic diisocyanates such as hexamethylene diisocyanate (HDI), decamethylene diisocyanate, and 2,4,4-trimethylhexamethylene diisocyanate; alicyclic diisocyanates such as 4,4'-dicyclohexylmethane diisocyanate (H12MDI), isophorone diisocyanate (IPDI), 2,5- or 2,6-norbornane diisocyanate, hydrogenated xylylene diisocyanate (H6XDI), hydrogenated tolylene diisocyanate, and 2,4-bis-(8-isocyanatooctyl)-1,3-dioctylcyclobutane (OCDI); araliphatic diisocyanates such as m- or p-xylylene diisocyanate (XDI) and tetramethylxylylene diisocyanate (TMXDI); and aromatic diisocyanates such as 2,4,6-triisopropylphenyl diisocyanate (TIDI), 4,4'- or 2',4-diphenylmethane diisocyanate (MDI), and 2,4- or 2,6-tolylene diisocyanate (TDI).

The compound that blocks the terminal isocyanate group of the condensation reaction product is a compound having a functional group that can react with the isocyanate group, and examples thereof include polyethylene glycol monomethyl ether and polypropylene glycol monomethyl ether. In particular, from the viewpoint of compatibility with the overcoat liquid, polyethylene glycol monomethyl ether is preferable. The number of moles of ethylene oxide added to the polyethylene glycol monomethyl ether is adjusted, and the resulting carbodiimide group-containing polymer can be blended in the overcoat liquid in the form of an aqueous solution or emulsion.

From the viewpoint of improving scratch resistance and water resistance, the carbodiimide group equivalent amount of the carbodiimide group-containing polymer is preferably 100 or more, more preferably 170 or more, and even more preferably 200 or more, and from the viewpoint of compatibility with an overcoat liquid, is preferably 500 or less, more preferably 400 or less, and even more preferably 300 or less. Note that "carbodiimide group equivalent amount" means the mass of the carbodiimide group-containing polymer per mole of carbodiimide group.

Examples of commercially available carbodiimide group-containing polymers include CARBODILITE E-02, CARBODILITE E-05, and CARBODILITE E-07S (all are trade names, manufactured by Nisshinbo Chemical Inc.).

[Polyfunctional Oxazoline Compound]

The polyfunctional oxazoline compound is a compound having two or more oxazoline groups per molecule. As the polyfunctional oxazoline compound, a polymer containing two or more oxazoline groups (also referred to as an "oxazoline group-containing polymer" hereinafter) is preferable.

From the viewpoint of increasing the cross-linking reactivity with the carboxy group and improving the scratch resistance and water resistance, the number average molecular weight of the oxazoline group-containing polymer is preferably 1,000 or more, more preferably 5,000 or more, even more preferably 10,000 or more, and is preferably 100,000 or less, more preferably 50,000 or less, and even more preferably 30,000 or less.

Examples of the oxazoline group-containing polymer that can be used include polymers whose main chain has an acrylic backbone, polymers whose main chain has a styrene/acrylic backbone, polymers whose main chain has a styrene backbone, and polymers whose main chain has an acrylonitrile/styrene backbone.

From the viewpoint of improving the storage stability of the overcoat liquid and from the viewpoint of improving the scratch resistance and water resistance, the oxazoline group equivalent amount of the oxazoline group-containing polymer is preferably 100 or more, more preferably 170 or more, and even more preferably 200 or more, and is preferably 500 or less, more preferably 400 or less, and even more preferably 300 or less. Note that "oxazoline group equivalent amount" means the mass of the oxazoline group-containing polymer per 1 mole of oxazoline group.

Examples of commercially available oxazoline group-containing polymers include the "EPOCROS WS" series, such as "EPOCROS WS-300", "EPOCROS WS-500", and "EPOCROS WS-700" (all are water-soluble types manufactured by Nippon Shokubai Co., Ltd.).

[Polyfunctional Epoxy Compound]

The polyfunctional epoxy compound is a compound having two or more epoxy groups per molecule.

From the viewpoint of improving scratch resistance and water resistance, as the polyfunctional epoxy compound, a compound containing two or more glycidyl ether groups per molecule is preferable, a polyglycidyl ether compound of a polyhydric alcohol is more preferable, and a polyglycidyl ether compound of a polyhydric alcohol having a hydrocarbon group with 3 to 8 carbon atoms is even more preferable.

From the viewpoint of improving scratch resistance and water resistance, the epoxy group equivalent amount of the polyfunctional epoxy compound is preferably 100 or more, more preferably 120 or more, even more preferably 140 or more, and is preferably 500 or less, more preferably 400 or less, even more preferably 300 or less, and still more preferably 200 or less.

Examples of polyfunctional epoxy compounds include polypropylene glycol diglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, 1,6-hexanediol diglycidyl ether, 1,4-butanediol diglycidyl ether, 1,4-cyclohexanedimethanol diglycidyl ether, ethylene glycol diglycidyl ether, polyethylene glycol diglycidyl ether, and hydrogenated bisphenol A diglycidyl ether. Among these, from the viewpoint of improving scratch resistance and water resistance, the polyfunctional epoxy compound is preferably one or more selected from trimethylolpropane polyglycidyl ether, pentaerythritol polyglycidyl ether, neopentyl glycol diglycidyl ether, 1,6-hexanediol diglycidyl ether, 1,4-butanediol diglycidyl ether, 1,4-cyclohexanedimethanol diglycidyl ether, and diethylene glycol diglycidyl ether, and more preferably 1,6-hexanediol diglycidyl ether.

(Water-Soluble Organic Solvent)

The overcoat liquid according to the present invention preferably further contains a water-soluble organic solvent from the viewpoint of improving the ejection properties when the overcoat liquid is ejected using an inkjet ejection method and the storage stability of the overcoat liquid, and from the viewpoint of adjusting the surface tension of the overcoat liquid and improving the scratch resistance and water resistance.

As described above, "water-soluble organic solvent" in the present invention refers to an organic solvent with an amount dissolved of 10 mL or more when the organic solvent is dissolved in 100 mL of water at 25°C.

From the viewpoint of ejection stability, storage stability, and drying property, the boiling point of the water-soluble organic solvent is preferably 150°C or higher, more preferably 160°C or higher, even more preferably 170°C or higher, and is preferably 350°C or lower, more preferably 300°C or lower, and even more preferably 250°C or lower.

When two or more water-soluble organic solvents are used in combination as the water-soluble organic solvent, the boiling point of the water-soluble organic solvent is a weighted average value based on the content (% by mass) of each water-soluble organic solvent.

Similarly to the water-based ink, examples of the water-soluble organic solvent include polyhydric alcohols, polyhydric alcohol alkyl ethers, nitrogen-containing heterocyclic compounds, amides, amines, and sulfur-containing compounds. Among these, from the viewpoint of improving the ejection properties of the overcoat liquid when the overcoat liquid is ejected using an inkjet ejection method and the storage stability of the overcoat liquid, and from the viewpoint of adjusting the surface tension of the overcoat liquid and improving the scratch resistance and water resistance, it is preferable to use one or more selected from the group consisting of a polyhydric alcohol and a polyhydric alcohol alkyl ether.

A plurality of polyhydric alcohols within the concept of polyhydric alcohols can be mixed and used. In addition, similarly to the polyhydric alcohols, a plurality of polyhydric alcohol alkyl ethers within the concept of polyhydric alcohol alkyl ethers can also be mixed and used.

Preferred examples of the polyhydric alcohol and polyhydric alcohol alkyl ether are similar to those given as

examples for the water-based ink.

(Surfactant)

The overcoat liquid according to the present invention may further contain a surfactant from the viewpoint of adjusting the surface tension of the overcoat liquid and improving the scratch resistance and water resistance.

The surfactant can be selected as appropriate and used within a range in which the relationship between the surface tension γ(A) of the water-based ink and the surface tension γ(B) of the overcoat liquid is satisfied.

From the viewpoint of adjusting the surface tension of the overcoat liquid and improving the scratch resistance and water resistance, examples of the surfactant include nonionic surfactants, anionic surfactants, and amphoteric surfactants, and nonionic surfactants are preferable.

The surfactants may be used alone or in combination of two or more.

Examples of the nonionic surfactants include acetylene-based surfactants, polyoxyalkylene alkyl ether surfactants, polyhydric alcohol surfactants, fatty acid alkanolamides, silicone-based surfactants, and fluorine-based surfactants.

In particular, the surfactant is preferably one or more selected from the group consisting of an acetylene-based surfactant and a silicone-based surfactant, from the viewpoint of adjusting the surface tension of the overcoat liquid and improving the scratch resistance and water resistance.

Examples of acetylene-based surfactants include 2,4,7,9-tetramethyl-5-decyne-4,7-diol, 2,5,8,11-tetramethyl-6-dodecyne-5,8-diol, 3,6-dimethyl-4-octyne-3,6-diol, 3,5-dimethyl-1-hexyn-3-ol, 2,4-dimethyl-5-hexyn-3-ol, and EO adducts thereof. Among these, one or more selected from the group consisting of 2,4,7,9-tetramethyl-5-decyne-4,7-diol and EO adducts of 2,4,7,9-tetramethyl-5-decyne-4,7-diol.

The average number of moles of EO added of the acetylene-based surfactant is preferably 1 mole or more from the viewpoint of adjusting the surface tension of the overcoat liquid and improving the scratch resistance and water resistance, and from the same viewpoint as above, is preferably 35 moles or less, more preferably 30 moles or less, even more preferably 25 moles or less, still more preferably 20 moles or less, still more preferably 15 moles or less, still more preferably 10 moles or less, still more preferably 5 moles or less, still more preferably 3 moles or less, and still more preferably 2 moles or less.

From the viewpoint of adjusting the surface tension of the overcoat liquid and improving scratch resistance and water resistance, the HLB value of the acetylene-based surfactant is preferably 1 or more, more preferably 2 or more, and even more preferably 3 or more, and from the same viewpoint as above, is preferably 18 or less, more preferably 15 or less, even more preferably 10 or less, still more preferably 7 or less, and still more preferably 5 or less.

As described above, in the present invention, the HLB value can be determined using the Griffin's method using the above formula. The catalog values for each product can also be referred to.

Examples of commercially available acetylene-based surfactants include acetylene-based surfactants similar to those given as examples for the water-based ink.

Preferred examples of the silicone-based surfactant include polyether-modified silicone-based surfactants.

From the viewpoint of adjusting the surface tension of the overcoat liquid and improving the scratch resistance and water resistance, the HLB value of the polyether-modified silicone-based surfactant is preferably 2 or more, more preferably 3 or more, even more preferably 4 or more, still more preferably 6 or more, still more preferably 8 or more, and still more preferably 10 or more, and is preferably 18 or less, more preferably 17 or less, and even more preferably 16 or less.

Specific examples and commercially available products of polyether-modified silicone-based surfactants include those given as examples for the water-based ink.

(Water)

The overcoat liquid according to the present invention preferably contains water.

The water used in the overcoat liquid according to the present invention is preferably pure water or ion-exchanged water, from the viewpoint of preventing the inclusion of unintended substances.

The overcoat liquid according to the present invention may further contain other components that are commonly used in overcoat liquids or the like used in inkjet printing, such as a viscosity modifier, an antifoaming agent, a preservative, an antifungal agent, and an antirust agent. However, it is preferable that the overcoat liquid is substantially free of resin having carboxy groups capable of cross-linking with the compound (II). Examples of such a resin having carboxy groups include resins similar to those given as examples for the binder resin (Ib) described above.

Here, "substantially free of resin having carboxy groups capable of cross-linking with the compound (II)" means that the content of the resin having carboxy groups capable of cross-linking with the compound (II) in the overcoat liquid according to the present invention is preferably 1% by mass or less, more preferably 0.1% by mass or less, even more preferably 0.01% by mass or less, and still more preferably 0% by mass.

The overcoat liquid according to the present invention can be obtained by mixing and stirring the compound (II), water, and if necessary, a water-soluble organic solvent, a surfactant, and the other components described above. The compound (II) is preferably formulated as an aqueous solution or emulsion.

(Composition of Overcoat Liquid)

From the viewpoint of improving scratch resistance and water resistance, the content of the compound (II) in the overcoat liquid according to the present invention is preferably 1% by mass or more, more preferably 3% by mass or more, even more preferably 5% by mass or more, still more preferably 7% by mass or more, and still more preferably 8% by mass or more, and from the same viewpoint as above, is preferably 20% by mass or less, more preferably 15% by mass or less, and even more preferably 10% by mass or less.

When the overcoat liquid according to the present invention contains a water-soluble organic solvent, from the viewpoint of improving scratch resistance and water resistance, the content of the water-soluble organic solvent in the overcoat liquid according to the present invention is preferably 10% by mass or more, more preferably 20% by mass or more, and even more preferably 30% by mass or more, and from the same viewpoint as above, is preferably 70% by mass or less, more preferably 60% by mass or less, and even more preferably 50% by mass or less.

When the overcoat liquid according to the present invention contains a surfactant, from the viewpoint of improving scratch resistance and water resistance, the content of the surfactant in the overcoat liquid according to the present invention is preferably 3% by mass or less, more preferably 2.5% by mass or less, even more preferably 2% by mass or less, still more preferably 1.5% by mass or less, still more preferably 1% by mass or less, and still more preferably 0.5% by mass or less.

When the overcoat liquid according to the present invention contains water, from the viewpoint of improving scratch resistance and water resistance, the content of water in the overcoat liquid according to the present invention is preferably 30% by mass or more, more preferably 40% by mass or more, and even more preferably 50% by mass or more, and from the same viewpoint as above, is preferably 80% by mass or less, more preferably 75% by mass or less, and even more preferably 70% by mass or less.

(Physical Properties of Overcoat Liquid)

From the viewpoint of improving scratch resistance and water resistance, the surface tension y(B) of the overcoat liquid according to the present invention is preferably 27 mN/m or more, more preferably 29 mN/m or more, even more preferably 31 mN/m or more, and still more preferably 33 nm/m or more, and from the same viewpoint as above, is preferably 44 mN/m or less, more preferably 42 mN/m or less, and even more preferably 40 mN/m or less. The surface tension is measured using the method described in "Examples".

[Another Aspect of Ink Set for Inkjet Recording]

Another aspect of the ink set for inkjet recording according to the present invention (also simply referred to as "another aspect" hereinafter) includes a water-based ink containing a pigment and an overcoat liquid substantially free of pigment,

wherein the water-based ink contains a compound (II) having a reactive group capable of cross-linking with a carboxy group of a binder resin (Ib) having carboxy groups, the overcoat liquid contains the binder resin (Ib) having carboxy groups, and a surface tension y(B) of the overcoat liquid is greater than a surface tension y(A) of the water-based ink.

According to the other aspect of the present invention, it is possible to provide a heat-shrunk printed material having excellent scratch resistance and water resistance when printing on a heat-shrinkable resin film. Although the reason is not certain, it is thought to be as follows.

In the present invention, the surface tension of the overcoat liquid is greater than the surface tension of the water-based ink. Therefore, when the water-based ink is applied to a printing substrate and then the overcoat liquid is applied to the area where the water-based ink has been applied, convection (so-called Marangoni convection) occurs between the water-based ink coating and the overcoat liquid coating on the printing substrate using the gradient of the surface tension as a driving force. As a result, the compound (II) having a reactive group contained in the water-based ink coating is distributed more uniformly in the overcoat liquid coating than in the case of diffusion based on the difference in the concentration of the compound (II) between the water-based ink coating and the overcoat liquid coating on the printing substrate, and a uniform cross-linking reaction between the carboxy group of the binder resin (Ib) contained in the overcoat liquid coating and the reactive group of the compound (II) is promoted, and the resulting printed coating is less likely to have a distribution in strength, making it possible to obtain a printed material having the printed coating with uniform strength. Even when such a printed material is thermally shrunk, it is conceivable that selective shrinkage does not occur in portions of the printed coating that are weaker in strength, and the occurrence of fine cracks and wrinkles in the printed coating can

be reduced. As a result, it is presumed that embrittlement of the printed coating is suppressed, and scratch resistance and water resistance are improved.

In the other aspect of the present invention, the surface tension y(B) of the overcoat liquid (simply referred to as "surface tension y(B)" hereinafter) is greater than the surface tension y(A) of the water-based ink (simply referred to as "surface tension y(A)" hereinafter).

The difference $\Delta\gamma$ between the surface tension y(B) of the overcoat liquid and the surface tension y(A) of the water-based ink is similar to that in the case of the water-based ink according to the ink for inkjet recording of the present invention described above.

<Water-Based Ink According to the Other Aspect>

The water-based ink according to the other aspect of the present invention contains a pigment and the compound (II) having a reactive group capable of cross-linking with a carboxy group of the binder resin (Ib) having carboxy groups. A water-based ink having one color can be used alone, or two or more water-based inks having different colors can be used in combination. That is, the printed image formed by the water-based ink according to the present invention may be a multicolor print, for example, a three-color print, a four-color print, or a print using inks having four or more different colors.

In the water-based ink according to the other aspect of the present invention, the pigment is similar to the pigment in the water-based ink according to the ink for inkjet recording of the present invention described above. Also, in the other aspect of the present invention, a pigment dispersing resin (Ia) is similar to the pigment dispersing resin (Ia) of the water-based ink for the ink for inkjet recording of the present invention described above.

In the water-based ink according to the other aspect of the present invention, the compound (II) having a reactive group capable of cross-linking with a carboxy group of the binder resin (Ib) having carboxy groups is similar to the compound (II) in the overcoat liquid according to the ink for inkjet recording of the present invention described above.

The water-based ink according to the other aspect of the present invention preferably further contains a water-soluble organic solvent from the viewpoint of improving the ejection properties and storage stability of the water-based ink, and from the viewpoint of adjusting the surface tension of the water-based ink and improving the scratch resistance and water resistance. The water-soluble organic solvents may be used alone or in combination of two or more. In the water-based ink according to the other aspect of the present invention, the water-soluble organic solvent is similar to the water-soluble organic solvent in the water-based ink according to the ink for inkjet recording of the present invention described above.

The water-based ink according to the other aspect of the present invention preferably further contains a surfactant, from the viewpoint of adjusting the surface tension of the water-based ink and improving the scratch resistance and water resistance. In the water-based ink according to the other aspect of the present invention, the surfactant is similar to the surfactant in the water-based ink according to the ink for inkjet recording of the present invention described above.

The water-based ink according to the other aspect of the present invention contains water.

In the water-based ink according to the other aspect of the present invention, water is similar to water in the water-based ink according to the ink for inkjet recording of the present invention described above.

The water-based ink according to the other aspect of the present invention may further contain various additives as optional components, such as a humectant, a wetting agent, a penetrant, a dispersant, a viscosity modifier, an antifoaming agent, a preservative, an antifungal agent, and an antirust agent, and a fixing resin.

The water-based ink according to the other aspect of the present invention can be obtained by mixing and stirring a pigment, a compound (II) having a reactive group capable of cross-linking with a carboxy group of the binder resin (Ib) having carboxy groups, water, and, if necessary, a pigment dispersing resin (Ia), a neutralizing agent, a surfactant, a water-soluble organic solvent, and the like.

When pigment-containing resin particles are contained, as described above, it is preferable that the pigment, the pigment dispersing resin (Ia), and, if necessary, a neutralizing agent, a surfactant, and the like are dispersed using a known method to obtain an aqueous dispersion of the pigment-containing resin particles, and then the resulting dispersion is blended into the water-based ink.

(Composition of Water-Based Ink According to the Other Aspect)

The content of the pigment in the water-based ink according to the other aspect of the present invention is similar to that in the case of the water-based ink according to the ink for inkjet recording of the present invention described above.

When the pigment in the water-based ink according to the other aspect of the present invention is in a form in which the pigment is dispersed using the pigment dispersing resin (Ia), the content of the pigment dispersing resin (Ia) in the water-based ink according to the other aspect of the present invention is similar to that in the case of the water-based ink according to the ink for inkjet recording of the present invention described above.

When the pigment in the water-based ink according to the other aspect of the present invention is in a form in

which the pigment is dispersed using the pigment dispersing resin (Ia), the mass ratio of the content of the pigment to the total content of the pigment and the pigment dispersing resin (Ia) in the water-based ink according to the other aspect of the present invention [pigment/(pigment + pigment dispersing resin (Ia))] is similar to that in the case of the water-based ink according to the ink for inkjet recording of the present invention described above.

From the viewpoint of improving the scratch resistance and water resistance, the content of the compound (II) having a reactive group capable of cross-linking with a carboxy group of the binder resin (Ib) having carboxy groups according to the other aspect of the present invention is preferably 0.5% by mass or more, more preferably 1% by mass or more, even more preferably 1.2% by mass or more, and still more preferably 1.5% by mass or more, and from the same viewpoint as above, is preferably 20% by mass or less, more preferably 15% by mass or less, even more preferably 10% by mass or less, and still more preferably 5% by mass or less.

The content of water in the water-based ink according to the other aspect of the present invention is similar to that in the case of the water-based ink according to the ink for inkjet recording of the present invention described above.

When the water-based ink according to the other aspect of the present invention further contains a water-soluble organic solvent, the content of the water-soluble organic solvent in the water-based ink according to the present invention is similar to that in the case of the water-based ink according to the ink for inkjet recording of the present invention described above.

When the water-based ink according to the other aspect of the present invention further contains a surfactant, the content of the surfactant in the water-based ink according to the present invention is similar to that in the case of the water-based ink according to the ink for inkjet recording of the present invention described above.

(Physical Properties of Water-Based Ink According to the Other Aspect)

The surface tension y(A) of the water-based ink according to the other aspect of the present invention is similar to that of the water-based ink according to the ink for inkjet recording of the present invention described above.

The viscosity at 32°C of the water-based ink according to the other aspect of the present invention is similar to that of the water-based ink according to the ink for inkjet recording of the present invention described above.

The pH of the water-based ink according to the other aspect of the present invention is similar to that of the water-based ink according to the ink for inkjet recording of the present invention described above.

<Overcoat Liquid According to the Other Aspect>

The overcoat liquid according to the other aspect of the present invention is substantially free of pigment and contains the binder resin (Ib) having carboxy groups.

The overcoat liquid according to the present invention is substantially free of pigment.

In the overcoat liquid according to the other aspect of the present invention, the binder resin (Ib) having carboxy groups is similar to the binder resin (Ib) in the water-based ink according to the ink for inkjet recording of the present invention described above.

The overcoat liquid according to the other aspect of the present invention preferably further contains a water-soluble organic solvent from the viewpoint of improving the ejection properties of the overcoat liquid when the overcoat liquid is ejected using an inkjet ejection method and the storage stability of the overcoat liquid, and from the viewpoint of adjusting the surface tension of the overcoat liquid and improving the scratch resistance and water resistance.

In the overcoat liquid according to the other aspect of the present invention, the water-soluble organic solvent is similar to that in the overcoat liquid according to the ink for inkjet recording of the present invention described above.

The overcoat liquid according to the other aspect of the present invention may further contain a surfactant from the viewpoint of adjusting the surface tension of the overcoat liquid and improving the scratch resistance and water resistance.

The surfactant can be selected as appropriate and used within a range in which the relationship between the surface tension y(A) of the water-based ink and the surface tension y(B) of the overcoat liquid is satisfied.

In the overcoat liquid according to the other aspect of the present invention, the surfactant is similar to that in the overcoat liquid according to the ink for inkjet recording of the present invention described above.

It is preferable that the overcoat liquid according to the other aspect of the present invention further contains water.

In the overcoat liquid according to the other aspect of the present invention, water is similar to water in the overcoat liquid according to the ink for inkjet recording of the present invention described above.

The overcoat liquid according to the other aspect of the present invention may further contain other components that are commonly used in overcoat liquids or the like used in inkjet printing, such as a viscosity modifier, an antifoaming agent, a preservative, an antifungal agent, and an antirust agent.

The overcoat liquid according to the present invention can be obtained by mixing and stirring the binder resin (Ib)

having carboxy groups, water, and if necessary, a water-soluble organic solvent, a surfactant, and the other components described above. The compound (II) is preferably formulated as an aqueous solution or emulsion.

(Composition of Overcoat Liquid According to the Other Aspect)

From the viewpoint of improving scratch resistance and water resistance, the content of the binder resin (Ib) having carboxy groups in the overcoat liquid according to the other aspect of the present invention is preferably 10% by mass or more, more preferably 15% by mass or more, and even more preferably 20% by mass or more, and from the same viewpoint as above, is preferably 40% by mass or less, more preferably 35% by mass or less, and even more preferably 30% by mass or less.

When the overcoat liquid according to the other aspect of the present invention contains a water-soluble organic solvent, from the viewpoint of improving scratch resistance and water resistance, the content of the water-soluble organic solvent in the overcoat liquid according to the other aspect of the present invention is preferably 5% by mass or more, more preferably 8% by mass or more, and even more preferably 10% by mass or more, and from the same viewpoint as above, is preferably 40% by mass or less, more preferably 30% by mass or less, and even more preferably 20% by mass or less.

When the overcoat liquid according to the other aspect of the present invention contains a surfactant, the content of the surfactant in the overcoat liquid according to the other aspect of the present invention is similar to that in the case of the overcoat liquid according to the ink for inkjet recording of the present invention described above.

When the overcoat liquid according to the other aspect of the present invention contains water, the content of water in the overcoat liquid according to the other aspect of the present invention is similar to that in the case of the overcoat liquid according to the ink for inkjet recording of the present invention described above.

(Physical Properties of Overcoat Liquid According to the Other Aspect)

The surface tension y(B) of the overcoat liquid according to the other aspect of the present invention is similar to that of the overcoat liquid according to the ink for inkjet recording of the present invention described above.

[Inkjet Printing Method]

(Step 1)

Step 1 is a step of, after applying the water-based ink to a printing substrate using an inkjet ejection method, applying the overcoat liquid to the area where the water-based ink was applied using an inkjet ejection method.

In Step 1, the ejection interval between the water-based ink and the overcoat liquid depends on the temperature of the inkjet head and the temperature of the printing substrate, but is preferably 0.1 seconds or more, more preferably 1 second or more, and from the viewpoint of improving scratch resistance and water resistance, is 30 seconds or less.

In Step 1, as an inkjet method for ejecting the water-based ink and the overcoat liquid, a piezo method is preferable from the viewpoint of ejection properties.

From the viewpoint of improving scratch resistance and water resistance, the equivalent ratio of the compound (II) used as calculated using the following formula is preferably 0.5 or more, more preferably 1 or more, even more preferably 2 or more, still more preferably 2.5 or more, still more preferably 3 or more, still more preferably 3.5 or more, and still more preferably 4 or more, and from the same viewpoint as above, is preferably 10 or less, more preferably 8 or less, and even more preferably 6 or less.

Equivalent ratio of compound (II) used = [(amount of droplets of overcoat liquid ejected × content of compound (II) in overcoat liquid) / reactive group equivalent amount of compound (II)] / [(amount of droplets of water-based ink ejected × content of binder resin (Ib) in water-based ink × (acid value of binder resin (Ib) / (56.11 × 1000))]

Note that when the pigment dispersing resin (Ia) has a carboxy group, the carboxy group can also undergo a cross-linking reaction with the compound (II). In the present invention, however, the equivalent ratio of the compound (II) used is calculated as the equivalent ratio of the reactive group of the compound (II) to the carboxy group of the binder resin (Ib).

When the other aspect of the ink set for inkjet recording of the present invention is used, the equivalent amount of the compound (II) used is calculated using the following formula. The equivalent amount of the compound (II) used when the other aspect of the ink set for inkjet recording of the present invention is similar to that in the case where the ink for inkjet recording of the present invention described above is used.

Equivalent ratio of compound (II) used = [(amount of droplets of water-based ink ejected × content of compound (II) in water-based ink) / reactive group equivalent amount of compound (II)] / [(amount of droplets of overcoat liquid ejected × content of binder resin (Ib) in overcoat liquid × (acid value of binder resin (Ib) / (56.11 × 1000))]

Examples of printing substrates include high-absorbency plain paper, low-absorbency coated paper, and non-absorbency resin films. From the viewpoint of scratch resistance and water resistance, low-absorbency printing substrates are preferable, and one or more selected from the group consisting of coated paper and resin films are more preferable, and resin films are even more preferable.

Examples of coated paper include general-purpose glossy paper and multicolor form glossy paper.

Examples of the resin film include one or more selected from the group consisting of a polyester film, a polyvinyl chloride film, a polypropylene film, and a polyethylene film. The surface of the resin film on which a printed image is formed may be corona treated.

From the viewpoint of scratch resistance and water resistance, the resin film is preferably a heat-shrinkable resin film that shrinks when heated.

A heat-shrinkable resin film is a film that has molecular orientation due to stretching treatment of an unstretched film produced using a known method, and does not shrink at room temperature but shrinks when heated. Examples of heat-shrinkable resin films include films made of one or a mixture of two or more selected from the group consisting of polyester-based resins; styrene-based resins such as polystyrene and styrene-butadiene copolymers; polylactic acid; olefin-based resins such as polyethylene, polypropylene, and polyolefins; and thermoplastic resins such as vinyl chloride-based resins, and laminate films thereof.

Examples of commercially available heat-shrinkable resin films include the "Space Clean" series (manufactured by Toyobo Co., Ltd.); the "DXL" series, "HISHIPET" series, "PLABIO", and "HybrexDL" (all are manufactured by Mitsubishi Chemical Corporation); the "BONSET" series (manufactured by C.I. TAKIRON Corporation); and the "Fancywrap (PET)" series (manufactured by Gunze Limited).

(Step 2)

Step 2 is a step of heating the water-based ink coating and the overcoat liquid coating formed on the printing substrate in Step 1. In Step 2, the compound (II) contained in the overcoat liquid on the printing substrate is distributed into the water-based ink coating, and a cross-linking reaction between the carboxy group of the binder resin (Ib) and the reactive group of the compound (II) proceeds, thereby obtaining a printed material having a printed coating with uniform strength.

In the inkjet printing method according to the present invention, when the inkjet set according to the other aspect of the present invention is used, in Step 2, the compound (II) contained in the water-based ink on the printing substrate is distributed into the overcoat liquid coating, and a cross-linking reaction between the carboxy group of the binder resin (Ib) and the reactive group of the compound (II) proceeds, thereby obtaining a printed material having a printed coating with uniform strength.

The heat treatment in Step 2 is preferably also a treatment for drying the water-based ink coating and the overcoat liquid coating formed on the printing substrate in Step 1.

Examples of a method for the heat treatment in Step 2 include a method in which gas adjusted to a desired temperature is blown onto the coatings formed on the printing substrate, a method in which the printing substrate on which the coating has been formed is passed through a gas atmosphere adjusted to a desired temperature, a method in which the coating formed on the printing substrate is irradiated with an infrared heater, and a method in which the printing substrate on which the coating has been formed is heated using a platen heater.

From the viewpoint of productivity, the heating temperature is preferably 40°C or higher, and more preferably 50°C or higher, and from the viewpoint of preventing any influence on the printing substrate, the heating temperature is preferably 100°C or lower, more preferably 90°C or lower, and even more preferably 70°C or lower.

From the viewpoint of scratch resistance and water resistance, the heating time is preferably 30 seconds or more, and more preferably 1 minute or more, and from the viewpoint of productivity, is preferably 10 minutes or less, more preferably 7 minutes or less, and even more preferably 5 minutes or less.

[Packaging Method]

In the present invention, when the printing substrate is a heat-shrinkable resin film, the inkjet printing ink set described above is preferably used in the packaging method for packaging an object to be packaged.

As a packaging method, it is preferable use a method in which a printed material obtained using the inkjet printing method described above is arranged around the object to be packaged, and then the heat-shrinkable resin film substrate of

the printed material is shrunk to obtain a package.

From the viewpoint of productivity, the heating temperature for shrinkage is preferably 60°C or higher, more preferably 70°C or higher, and even more preferably 80°C or higher, and from the viewpoint of preventing any influence on the resin film substrate, the heating temperature is preferably 200°C or lower, more preferably 150°C or lower, even more preferably 130°C or lower, and still more preferably 110°C or lower. This heating temperature is preferably lower than or equal to the temperature at which the printed material can be used without any problems even if shrinkage occurs.

From the viewpoint of shrinking the resin film substrate, the heating time for shrinkage is preferably 3 seconds or more, more preferably 5 seconds or more, and even more preferably 7 seconds or more, and from the viewpoint of productivity, is preferably 5 minutes or less, more preferably 3 minutes or less, and even more preferably 1 minute or less.

In relation to the above-described embodiments, the present invention further discloses the following.

<1>

An inkjet printing ink set including: a water-based ink containing a pigment; and an overcoat liquid substantially free of pigment,

wherein the water-based ink contains a binder resin (Ib) having carboxy groups,
wherein the overcoat liquid contains a compound (II) having a reactive group capable of cross-linking with the carboxy group of the binder resin (Ib), and
wherein a surface tension y(B) of the overcoat liquid is greater than a surface tension y(A) of the water-based ink.

<2>

An inkjet printing ink set including: a water-based ink containing a pigment; and an overcoat liquid substantially free of pigment,

wherein the water-based ink contains a compound (II) having a reactive group capable of cross-linking with a carboxy group of a binder resin (Ib) having carboxy groups,
wherein the overcoat liquid contains the binder resin (Ib) having carboxy groups, and
wherein a surface tension y(B) of the overcoat liquid is greater than a surface tension y(A) of the water-based ink.

<3>

The inkjet printing ink set according to <1> or <2>, wherein a difference $\Delta\gamma$ between the surface tension y(B) of the overcoat liquid and the surface tension y(A) of the water-based ink is 1.5 mN/m or more.

<4>

The inkjet printing ink set according to any one of <1> to <3>, wherein a difference $\Delta\gamma$ between the surface tension y(B) of the overcoat liquid and the surface tension y(A) of the water-based ink is 7 mN/m or more and 15 mN/m or less.

<5>

The inkjet printing ink set according to any one of <1> to <4>, wherein a reactive group equivalent amount of the compound (II) is 100 or more and 500 or less.

<6>

The inkjet printing ink set according to any one of <1> to <5>, wherein the compound (II) is one or more selected from the group consisting of a polyfunctional carbodiimide compound, a polyfunctional oxazoline compound, and a polyfunctional epoxy compound.

<7>

The inkjet printing ink set according to any one of <1> to <6>, wherein the compound (II) is a polyfunctional carbodiimide compound.

<8>

The inkjet printing ink set according to any one of <1> to <7>, wherein the binder resin (Ib) is one or more selected from the group consisting of a vinyl-based resin (Ib-1) having carboxy groups and a polyurethane resin (Ib-2) having carboxy groups.

<9>

The inkjet printing ink set according to <8>, wherein the vinyl-based resin (Ib-1) is a (meth)acrylic resin containing a constitutional unit derived from one or more carboxyl group-containing monomers selected from the group consisting of acrylic acid and methacrylic acid, and a constitutional unit derived from a (meth)acrylate having a hydrocarbon group derived from an aliphatic alcohol with 1 to 22 carbon atoms.

<10>

The inkjet printing ink set according to <8> or <9>, wherein a weight average molecular weight of the vinyl-based resin (Ib-1) is 10,000 or more and 800,000 or less.

<11>

The inkjet printing ink set according to any one of <1> to <8>, wherein the binder resin (Ib) is a copolymer of methacrylic acid, methyl methacrylate, and 2-ethylhexyl acrylate.

<12>

The inkjet printing ink set according to any one of <1> to <8>, wherein the binder resin (Ib) is a polyadduct of dimethylolpropionic acid, a polycarbonate-based polyol, and dicyclohexylmethane 4,4'-diisocyanate.

<13>

An inkjet printing ink set including: a water-based ink containing a pigment; and an overcoat liquid substantially free of pigment,

wherein the water-based ink contains, as a binder resin (Ib) having carboxy groups, a (meth)acrylic resin containing a constitutional unit derived from one or more carboxy group-containing monomers selected from the group consisting of acrylic acid and methacrylic acid, and a constitutional unit derived from a (meth)acrylate having a hydrocarbon group derived from an aliphatic alcohol with 1 to 22 carbon atoms, and a weight average molecular weight of the (meth)acrylic resin is 10,000 or more and 800,000 or less,
wherein the overcoat liquid contains a polyfunctional carbodiimide compound as a compound (II) having a reactive group capable of cross-linking with a carboxy group of the binder resin (Ib), and
wherein a difference Δγ between a surface tension y(B) of the overcoat liquid and a surface tension y(A) of the water-based ink is 7 mN/m or more and 15 mN/m or less.

<14>

An inkjet printing ink set including: a water-based ink containing a pigment; and an overcoat liquid substantially free of pigment,

wherein the water-based ink contains a copolymer of methacrylic acid, methyl methacrylate, and 2-ethylhexyl acrylate as a binder resin (Ib) having carboxy groups, and a weight average molecular weight of the copolymer is 10,000 or more and 800,000 or less,
wherein the overcoat liquid contains a polyfunctional carbodiimide compound as a compound (II) having a reactive group capable of cross-linking with a carboxy group of the binder resin (Ib), and
wherein a difference Δγ between a surface tension y(B) of the overcoat liquid and a surface tension γ(A) of the water-based ink is 7 mN/m or more and 15 mN/m or less.

<15>

An inkjet printing ink set including: a water-based ink containing a pigment; and an overcoat liquid substantially free of pigment,

wherein the water-based ink contains a polyurethane resin (Ib-2) having carboxy groups as a binder resin (Ib) having carboxy groups,
wherein the overcoat liquid contains a polyfunctional carbodiimide compound as a compound (II) having a reactive group capable of cross-linking with the carboxy group of the binder resin (Ib), and
wherein a difference Δγ between a surface tension y(B) of the overcoat liquid and a surface tension γ(A) of the water-based ink is 7 mN/m or more and 15 mN/m or less.

<16> An inkjet printing ink set including: a water-based ink containing a pigment; and an overcoat liquid substantially free of pigment,

wherein the water-based ink contains, as a binder resin (Ib) having carboxy groups, a polyadduct of dimethylolpropionic acid, a polycarbonate-based polyol, and dicyclohexylmethane 4,4'-diisocyanate,
wherein the overcoat liquid contains a polyfunctional carbodiimide compound as a compound (II) having a reactive group capable of cross-linking with the carboxy group of the binder resin (Ib), and
wherein a difference Δγ between a surface tension y(B) of the overcoat liquid and a surface tension γ(A) of the water-based ink is 7 mN/m or more and 15 mN/m or less.

<17>

An inkjet printing method using the inkjet printing ink set according to any one of <1> to <16>, including the following Step 1 and Step 2:

Step 1: After applying the water-based ink to a heat-shrinkable resin film substrate using an inkjet ejection method, applying the overcoat liquid to the area where the water-based ink was applied using an inkjet ejection

method; and
Step 2: Heating a coating of the water-based ink and a coating of the overcoat liquid formed on the printing substrate in Step 1.

<18>
A packaging method including: disposing a printed material obtained using the inkjet printing method according to <17> around an object to be packaged; and then shrinking the heat-shrinkable resin film substrate of the printed material to obtain a package.
<19>
A use of an inkjet printing ink set including: a water-based ink containing a pigment; and an overcoat liquid substantially free of pigment,

wherein the water-based ink contains a binder resin (Ib) having carboxy groups,
wherein the overcoat liquid contains a compound (II) having a reactive group capable of cross-linking with the carboxy group of the binder resin (Ib), and
wherein a surface tension y(B) of the overcoat liquid is greater than a surface tension y(A) of the water-based ink.

<20>
A use of an inkjet printing ink set including: a water-based ink containing a pigment; and an overcoat liquid substantially free of pigment,

wherein the water-based ink contains a compound (II) having a reactive group capable of cross-linking with a carboxy group of a binder resin (Ib) having carboxy groups,
wherein the overcoat liquid contains the binder resin (Ib) having carboxy groups, and
wherein a surface tension y(B) of the overcoat liquid is greater than a surface tension y(A) of the water-based ink.

<21>
An inkjet printing apparatus for use with the inkjet printing ink set according to <1> to <16>, the inkjet printing apparatus including: an inkjet head filled with the water-based ink; and an inkjet head filled with the overcoat liquid.
<22>
The inkjet printing apparatus according to <21>, further including a processing unit configured to heat a coating of the water-based ink and a coating of the overcoat liquid on a printing substrate.

## Examples

In the following production examples, preparation examples, examples, and a comparative example, "parts" means "parts by mass" unless otherwise specified. Various physical properties were measured using the following methods.

[Measurement of Acid Value of Resin]

Using an automatic potentiometric titrator (manufactured by Kyoto Electronics Manufacturing Co., Ltd., electric burette, model number: APB-610), the resin was dissolved in a titration solvent mixture of toluene and acetone [toluene:acetone = 2:1 (volume ratio)] and titrated with a 0.1 N potassium hydroxide/ethanol solution, with the inflection point on the titration curve being the endpoint. The acid value (mgKOH/g) was calculated from the volume of potassium hydroxide solution titrated to the endpoint.

[Measurement of Number Average Molecular Weight and Weight Average Molecular Weight of Resin]

These molecular weights were determined using gel permeation chromatography. The measurement conditions are shown below.

GPC device: "HLC-8320GPC" manufactured by Tosoh Corporation
Column: "TSKgel SuperAWM-H", "TSKgel SuperAW3000", and "TSKgel guard column Super AW-H", all are manufactured by Tosoh Corporation
Eluent: Solution obtained by dissolving phosphoric acid and lithium bromide to concentrations of 60 mmol/L and 50 mmol/L respectively in N,N-dimethylformamide
Flow rate: 0.5 mL/min

Standard sample: Monodisperse polystyrene kits with known molecular weight "PStQuick B (F-550, F-80, F-10, F-1, A-1000)", "PStQuick C (F-288, F-40, F-4, A-5000, A-500)" (all are manufactured by Tosoh Corporation)
A measurement sample was prepared by mixing 0.1 g of polymer with 10 mL of the eluent in a glass vial, stirring the mixture with a magnetic stirrer at 25°C for 10 hours, and filtering the mixture through a syringe filter "DISMIC-13HP" (manufactured by Advantech Co., Ltd., pore size: 0.2 pm, material: PTFE).

[Measurement of Average Particle Size of Pigment-Containing Resin Particles in Aqueous Dispersion and Average Particle Size of Pigment-Free Resin Particles in Aqueous Dispersion]

Cumulant analysis was performed using a laser particle size analyzer ("ELS-8000" manufactured by Otsuka Electronics Co., Ltd.) to measure the average particle size. A dispersion liquid diluted with water such that the concentration of particles to be measured was $5\times10^{-3}$% by mass (in terms of solid content concentration) was used. Measurement conditions were as follows: the temperature was 25°C, the angle between the incident light and the detector was 90°, and the integration count was 100, and the refractive index of water (1.333) was input as the refractive index of the dispersion medium. The obtained cumulant average particle size was taken as the average particle size of the pigment-containing resin particles in the aqueous dispersion or the average particle size of the pigment-free resin particles in the aqueous dispersion.

[Measurement of Solid Content Concentration]

Using an infrared moisture tester ("FD-230" manufactured by Kett Electric Laboratory Co., Ltd.), 5 g of the measurement sample was dried under conditions of a drying temperature of 150°C and measurement mode 96 (monitoring time: 2.5 minutes / fluctuation range: 0.05%), and the moisture content (% by mass) of the measurement sample was measured, and the solid content concentration (% by mass) was calculated using the following formula.

Solid content concentration (% by mass) = 100 - moisture content (% by mass) of measurement sample

[Measurement of Surface Tension y(A) of Water-based Ink and Surface Tension y(B) of Overcoat Liquid]

Using a surface tensiometer ("CBVP-Z" manufactured by Kyowa Interface Science Co., Ltd.), a platinum plate was immersed in 5 g of water-based ink or overcoat liquid adjusted to 20°C in a cylindrical polyethylene container (diameter 3.6 cm × depth 1.2 cm), and the static surface tension at 20°C was measured using the Wilhelmy method, and this was taken as the surface tension γ(A) of the water-based ink or the surface tension y(B) of the overcoat liquid.

[Measurement of Viscosity of Water-Based Ink]

The viscosity of the water-based ink at 32°C was measured using an E-type viscometer ("TV-25" manufactured by Toki Sangyo Co., Ltd., standard cone rotor 1°34' × R24, rotation speed was 50 rpm).

[Measurement of pH of Water-Based Ink]

The pH of the water-based ink at 25°C was measured using a tabletop pH meter ("F-71" manufactured by Horiba Ltd.) equipped with a pH electrode ("6337-10D" manufactured by Horiba Ltd.).

[Measurement of Amount of Water Absorbed by Printing Substrate during 100 Milliseconds of Contact between Printing Substrate and Pure Water]

The transfer amount of pure water during 100 milliseconds of contact therewith was measured using an automatic scanning liquid absorptometer (e.g., "KM500win" manufactured by Kumagai Riki Kogyo Co., Ltd.) under conditions of 23°C and 50% relative humidity. The measurement conditions are shown below.

"Spiral Method"

Contact Time (s): 0.010 to 1.0
Pitch (mm): 7
Length Per Sampling (degree): 86.29

Start Radius (mm): 20
End Radius (mm): 60
Min Contact Time (ms): 10
Max Contact Time (ms): 1,000
Sampling Pattern (1 to 50): 50
Number of Sampling Points (>0): 19

"Square Head"

Slit Span (mm): 1
Slit Width (mm): 5

[Production of Pigment Dispersing Resin (Ia)]

Production Example 1-1 (Production of Water-Insoluble Polymer (a1) having Carboxy Group)

16 parts of methacrylic acid, 44 parts of styrene, 30 parts of styrene-based macromonomer ("AS-6S" manufactured by Toagosei Co., Ltd., number average molecular weight was 6,000, solid content was 50% by mass), and 25 parts of methoxypolyethylene glycol methacrylate ("BLEMMER PME-200" manufactured by NOF Corporation) were mixed to prepare 115 parts of a monomer mixture solution.

18 parts of methyl ethyl ketone (hereinafter, referred to as "MEK"), 0.03 parts of 2-mercaptoethanol as a chain transfer agent, and 10% (11.5 parts) of the aforementioned monomer mixture solution were placed in a reaction vessel and mixed. This mixture was thoroughly purged with nitrogen.

Meanwhile, a mixture solution of 90% of the remaining portion (103.5 parts) of the monomer mixture solution, 0.27 parts of the chain transfer agent, 42 parts of MEK, and 3 parts of 2,2'-azobis(2,4-dimethylvaleronitrile) ("V-65" manufactured by Fujifilm Wako Pure Chemical Corporation) as a polymerization initiator was placed in a dropping funnel. Under a nitrogen atmosphere, the temperature was raised to 75°C while the mixture solution in the reaction vessel was stirred. The mixture solution in the dropping funnel was added dropwise over 3 hours. After 2 hours had passed at 75°C from the end of the dropwise addition, a solution obtained by dissolving 3 parts of the polymerization initiator in 5 parts of MEK was added, followed by further aging at 75°C for 2 hours and at 80°C for 2 hours. Furthermore, 50 parts of MEK was added to obtain a solution of a water-insoluble polymer (a1) having carboxy groups (weight average molecular weight: 50,000). The solid content concentration of the solution of the water-insoluble polymer (a1) having carboxy groups was 45% by mass.

[Production of Aqueous Dispersion of Pigment-Containing Resin Particles] Production Example 2-1 (Production of Aqueous Dispersion (D1) of White Pigment-Containing Resin Particles)

A 250 mL polyethylene bottle was filled in advance with a mixture solution obtained by mixing and dissolving 0.3 g of polyacrylic acid (PAA; Fujifilm Wako Pure Chemical Corporation, Mw: 5,000 (catalog value)) as a pigment dispersing resin (Ia), 0.21 g of 5 N sodium hydroxide solution (sodium hydroxide solid content: 16.9% by mass, manufactured by Fujifilm Wako Pure Chemical Corporation), and 1 g of ion-exchanged water. Then, 15 g of titanium oxide (rutile type, "KURONOSKR-380" manufactured by Titan Kogyo, Ltd., Al/Si treated, average primary particle size: 355 nm (catalog value 300 to 500 nm)) was added as a white pigment and 14.3 g of ion-exchanged water was added, and finally 369 g of 2 mm zirconia beads were added, and dispersion was performed for 8 hours at 250 rpm using a desktop pot mill stand (AS ONE Corporation). Thereafter, zirconia beads were removed using a mesh, and the solid content concentration was adjusted with water, and thus an aqueous dispersion of white pigment-containing resin particles (D1) (solid content concentration: 30% by mass, mass ratio [pigment/(pigment + pigment dispersing resin (Ia))]: 0.98) was obtained. The average particle size of the white pigment-containing resin particles in the aqueous dispersion was 325 nm.

Production Example 2-2 (Production of Aqueous Dispersion (D2) of Black Pigment-Containing Resin Particles)

95.2 parts of the solution of the water-insoluble polymer (a1) having carboxy groups obtained in Production Example 1-1 as a pigment dispersion resin (Ia) was mixed with 53.9 parts of MEK, and to this mixture were added 15.0 parts of 5 N sodium hydroxide solution, 0.5 parts of 25% aqueous ammonia, and 341.3 parts of ion-exchanged water as neutralizing agents, and further 100 parts of C.I. Pigment Black 7 (P.B.7, manufactured by Cabot Corporation) as a black pigment, to obtain a pigment mixture solution. The degree of neutralization was 78.8 mol%. The pigment mixture solution

was mixed using a disperser blade under conditions of 7,000 rpm and 20°C for 1 hour, and then dispersed using a high-pressure homogenizer "Microfluidizer M-140K" (manufactured by Microfluidics), for 15 passes at a pressure of 180 MPa to obtain a dispersed product.

From the obtained dispersed product, MEK was removed under reduced pressure at 60°C, and then some of the water was removed, followed by centrifugation to collect a liquid layer. The liquid layer was filtered through a "Minisart Syringe Filter" (manufactured by Sartorius, pore size: 5 pm, material: cellulose acetate) to remove coarse particles, thus obtaining an aqueous dispersion of black pigment-containing polymer particles. The solid content concentration was 25% by mass.

To 100 parts of the obtained aqueous dispersion of black pigment-containing polymer particles, 0.45 parts of trimethylolpropane polyglycidyl ether ("DENACOL EX-321L" manufactured by Nagase ChemteX Corporation, epoxy equivalent was 130) as a cross-linking agent and 15.23 parts of ion-exchanged water were added, and the resulting mixture was heated at 70°C for 3 hours while the mixture was stirred. After the mixture was cooled to room temperature, the liquid layer was collected and filtered through the "Minisart Syringe Filter" (manufactured by Sartorius, pore size: 5 μm, material: cellulose acetate) to remove coarse particles, thus obtaining an aqueous dispersion K of black pigment-containing polymer particles (solid content concentration: 22% by mass, mass ratio [pigment/(pigment + pigment dispersing resin (Ia) having a cross-linked structure)]: 0.69). The average particle size of the black pigment-containing polymer particles in the resulting aqueous dispersion K was 100 nm.

[Production of Aqueous Dispersion of Pigment-Free Resin Particles made of Binder Resin (Ib)]

Production Example 3-1 (Production of Aqueous Dispersion (d1) of Pigment-Free Acrylic Resin Particles)

Monomers, sodium polyoxyethylene alkyl ether sulfate ("Latemul E-118B" manufactured by Kao Corporation) (hereinafter, referred to as "Latemul E-118B") as an emulsifier, potassium persulfate as a polymerization initiator, and ion-exchanged water shown in "Initial Monomer Solution" in Table 1 were placed in a reaction vessel equipped with a dropping funnel. The mixture was purged with nitrogen, and thus an initial monomer solution was obtained.

Separately, monomers, an emulsifier, a polymerization initiator, and ion-exchanged water shown in "Dropwise Monomer Solution" in Table 1 were mixed, and thus a dropwise monomer solution was obtained. The dropwise monomer solution was placed in a dropping funnel and purged with nitrogen.

Under a nitrogen atmosphere, the temperature was raised from room temperature to 80°C over 30 minutes while the initial monomer solution in the reaction vessel was stirred. While maintaining the temperature at 80°C, the dropwise monomer solution in the dropping funnel was gradually added dropwise into the reaction vessel over 3 hours. After completion of the addition, stirring was performed for 1 hour while maintaining the temperature in the reaction vessel. The mixture was then filtered through a 200-mesh filter, and thus an aqueous dispersion (d1) of pigment-free acrylic resin particles (solid content concentration: 44.1% by mass, acid value: 16 mg/KOH/g, weight average molecular weight of acrylic resin: 750,000, average particle size: 95 nm) was obtained.

[Table 1]

Table 1

| | | Production Example |
|---|---|---|
| | | 3-1 |
| Initial monomer solution (parts) | Methacrylic acid | 0.5 |
| | Methyl methacrylate | 8.5 |
| | 2-Ethylhexyl acrylate | 11 |
| | Latemul E-118B | 11.1 |
| | Ion-exchanged water | 382.8 |
| | Potassium persulfate | 0.2 |

(continued)

| | | Production Example |
|---|---|---|
| | | 3-1 |
| Dropwise monomer solution (parts) | Methacrylic acid | 9.5 |
| | Methyl methacrylate | 161.5 |
| | 2-Ethylhexyl acrylate | 209 |
| | Latemul E-118B | 35.1 |
| | Ion-exchanged water | 183 |
| | Potassium persulfate | 0.6 |

Production Example 3-2 (Production of Aqueous Dispersion (d2) of Pigment-Free Urethane Resin Particles)

A four-neck flask equipped with a stirrer, a reflux condenser, a thermometer, and a nitrogen inlet tube was filled with 125.0 g of polycarbonate-based polyol ("Duranol T-6002" manufactured by Asahi Kasei Corporation, molecular weight: 2,000, hydroxyl value: 56.1 mgKOH/g) as the polyol component, 36.1 g of dicyclohexylmethane 4,4'-diisocyanate as the diisocyanate component, and 80.5 g of methyl ethyl ketone, and the mixture was allowed to react at 75°C for 1 hour to obtain an MEK solution containing a prepolymer. Furthermore, 4.8 g of dimethylolpropionic acid, 4.3 g of triethylamine, and methyl ethyl ketone were added, and the resulting mixture was allowed to react at 75° C for 1 hour. Then, the solution was cooled to 45°C, and then mixed with ion-exchanged water and 0.8 g of ethylenediamine. This emulsified dispersion was distilled under reduced pressure at 50°C for 2 hours to remove the solvent, yielding an aqueous dispersion (d2) of pigment-free urethane resin particles (solid content concentration: 20% by mass, acid value: 16 mgKOH/g, average particle size: 88 nm).

[Production of Water-Based Ink]

Ink Production Example 1 (Production of Water-Based Ink W-1)

34.00 g of the aqueous dispersion (D1) of white pigment-containing resin particles obtained in Production Example 2-1 (solid content concentration: 30% by mass), 12.81 g of the aqueous dispersion (d1) of pigment-free acrylic resin particles obtained in Production Example 3-1 (solid content concentration: 44.1% by mass), 30.00 g of propylene glycol (hereinafter referred to as "PG"), 3.00 g of diethylene glycol monoisobutyl ether (manufactured by Nippon Nyukazai Co., Ltd.) (hereinafter referred to as "iBDG"), 1.00 g of acetylene glycol-based surfactant "SURFYNOL 440" (manufactured by Nissin Chemical Industry Co., Ltd., EO (3.5 mol) adduct of 2,4,7,9-tetramethyl-5-decyne-4,7-diol, HLB value: 8 (catalog value), active ingredient was 100% by mass), 1.00 g of polyether-modified silicone-based surfactant "KF-6011" (manufactured by Shin-Etsu Chemical Co., Ltd., PEG-11 methyl ether dimethicone, HLB value: 14.5 (catalog value), and ion-exchanged water were added to bring the total amount to 100.00 g. The resulting mixture solution was filtered through a filter "Minisart Syringe Filter" (manufactured by Sartorius, pore size: 5.0 μm, material: cellulose acetate) to obtain a water-based ink W-1 (viscosity: 5.6 mPa ·s, pH: 8.2).

Ink Production Examples 2 to 4 (Production of Water-Based Inks W-2, K-1, and W-3)

Each water-based ink was obtained in the same manner as in Ink Production Example 1, except that the blending compositions were changed to those shown in Table 2.

[Table 2]

Table 2

| | | Ink Production Example | | | |
|---|---|---|---|---|---|
| | | 1 | 2 | 3 | 4 |
| Type of water-based ink | | W-1 | W-2 | K-1 | W-3 |
| Blending composition of water-based ink (g) | Aqueous dispersion (D1) of white pigment-containing resin particles | 34.00 | 34.00 | | 34.00 |
| | Aqueous dispersion (D2) of black pigment-containing resin particles | | | 46.27 | |
| | Aqueous dispersion (d1) of pigment-free acrylic resin particles | 12.81 | | 12.81 | |
| | Aqueous dispersion (d2) of pigment-free urethane resin particles | | 28.25 | | |
| | CARBODILITE E-07S (carbodiimide group equivalent amount: 234, active ingredient: 40% by mass) | | | | 4.71 |
| | PG | 30.00 | 30.00 | 30.00 | 30.00 |
| | iBDG | 3.00 | 3.00 | 3.00 | 3.00 |
| | SURFYNOL 440 | 1.00 | 1.00 | 1.00 | 1.00 |
| | KF-6011 | 1.00 | 1.00 | 1.00 | 1.00 |
| | Ion-exchanged water | 18.19 | 2.75 | 5.92 | 26.29 |
| | Total amount | 100.00 | 100.00 | 100.00 | 100.00 |
| Content of binder resin (Ib) in water-based ink (% by mass) | | 5.65 | 5.65 | 5.65 | 0.00 |
| Surface tension y(A) of water-based ink (mN/m) | | 26.2 | 26.3 | 26.3 | 25.9 |

Preparation Examples 1 to 12 (Preparation of Overcoat Liquids OC-1 to OC-12)

Materials were mixed according to the blending compositions shown in Table 3, and the resulting mixture solutions were filtered through the filter "Minisart Syringe Filter" (manufactured by Sartorius, pore size: 5.0 pm, material: cellulose acetate) to obtain overcoat liquids.

The notations in Tables 2 and 3 are as follows.

(Compound (II))

[Polyfunctional Carbodiimide Compound]

CARBODILITE E-07S: Polyvalent carbodiimide compound (carbodiimide group equivalent amount: 234, active ingredient was 40% by mass, manufactured by Nisshinbo Chemical Inc.)

CARBODILITE E-02: Carbodiimide group-containing polymer (carbodiimide group equivalent amount: 445, emulsion/dispersion type, active ingredient was 40% by mass, manufactured by Nisshinbo Chemical Inc.)

CARBODILITE E-05: Carbodiimide group-containing polymer (carbodiimide group equivalent amount: 313, emulsion/dispersion type, active ingredient was 40% by mass, manufactured by Nisshinbo Chemical Inc.)

[Polyfunctional Oxazoline Compound]

EPOCROS WS-700: Oxazoline group-containing polymer (oxazoline group equivalent amount: 220, polymer main chain: acrylic, number average molecular weight: 20,000, water-soluble type, active ingredient was 25% by mass, manufactured by Nippon Shokubai Co., Ltd.)

[Polyfunctional Epoxy Compound]

DENACOL EX-212: 1,6-hexanediol diglycidyl ether (epoxy group equivalent amount: 151, active ingredient was 100% by mass, manufactured by Nagase ChemteX Corporation)

(Surfactant)

SURFYNOL 420: Acetylene glycol-based surfactant (EO adduct of 2,4,7,9-tetramethyl-5-decyne-4,7-diol (average number of moles of EO added: 1), HLB value: 4 (catalog value), manufactured by Nissin Chemical Industry Co., Ltd.)

KF-6011: Polyether-modified silicone-based surfactant (PEG-11 methyl ether dimethicone, HLB value: 14.5 (catalog value), manufactured by Shin-Etsu Chemical Co., Ltd.)

[Table 3]

Table 3

| | | | Preparation Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Type of overcoat liquid | | | OC-1 | OC-2 | OC-3 | OC-4 | OC-5 | OC-6 | OC-7 | OC-8 | OC-9 | OC-10 | OC-11 | OC-12 |
| Blending composition of overcoat liquid (g) | Compound (II)*1 | CARBODILITE E-07S (carbodiimide group equivalent amount 234, active ingredient 40% by mass) | 22.60 | 22.60 | 22.60 | 22.60 | 22.60 | | | | | 4.52 | 13.56 | |
| | | CARBODILITE E-02 (carbodiimide group equivalent amount 445, active ingredient 40% by mass) | | | | | | 42.98 | | | | | | |
| | | CARBODILITE E-05 (carbodiimide group equivalent amount 313, active ingredient 40% by mass) | | | | | | | 30.23 | | | | | |
| | | EPOCROS WS-700 (oxazoline group equivalent amount 220, active ingredient 25% by mass) | | | | | | | | 34.00 | | | | |
| | | DENACOL EX-212 (epoxy group equivalent amount 151, active ingredient: 100% by mass) | | | | | | | | | 5.83 | | | |
| | Binder resin (Ib) | Aqueous dispersion (d1) of pigment-free acrylic resin particles | | | | | | | | | | | | 61.50 |
| | Water-soluble organic solvent | PG | 39.00 | 34.00 | 34.00 | 34.00 | 34.00 | 39.00 | 39.00 | 39.00 | 39.00 | 39.00 | 39.00 | 15.00 |
| | | iBDG | | 5.00 | 5.00 | 5.00 | 5.00 | | | | | | | |
| | Surfactant | SURFYNOL 420 | | | 1.00 | 2.00 | 2.00 | | | | | | | |
| | | KF-6011 | | | | | 1.00 | | | | | | | |

(continued)

| | | Preparation Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Type of overcoat liquid | | OC-1 | OC-2 | OC-3 | OC-4 | OC-5 | OC-6 | OC-7 | OC-8 | OC-9 | OC-10 | OC-11 | OC-12 |
| | Ion-exchanged water | 38.40 | 38.40 | 37.40 | 36.40 | 35.40 | 18.02 | 30.77 | 27.00 | 55.17 | 56.48 | 47.44 | 23.50 |
| | Total amount | 100.00 | 100.00 | 100.00 | 100.00 | 100.00 | 100.00 | 100.00 | 100.00 | 100.00 | 100.00 | 100.00 | 100.00 |
| Content of compound (II) in overcoat liquid (% by mass) | | 9.04 | 9.04 | 9.04 | 9.04 | 9.04 | 17.19 | 12.09 | 8.50 | 5.83 | 1.81 | 5.42 | 0.00 |
| Surface tension $\gamma$(B) of overcoat liquid (mN/m) | | 39.5 | 35.5 | 30.3 | 27.9 | 25.9 | 39.3 | 37.9 | 36.2 | 34.6 | 39.5 | 39.5 | 48.4 |

*1: The amount (g) of compound (II) blended is on an as-received basis.

Examples 1 to 13 and Comparative Example 1

The combinations of water-based inks and overcoat liquids shown in Table 4 were used as ink sets, and printed materials were produced using the heat-shrinkable PET film "Space Clean SP809" (manufactured by Toyobo Co., Ltd., heat shrinkage rate (90°C, 10 seconds): 50%, water absorption: 10 g/$m^2$ or less) as the printing substrate using the following method. The obtained printed materials were then evaluated as follows. The results are also shown in Table 4.

(Inkjet Printing)

[Inkjet Printing Conditions]

A printing evaluation device was equipped with three inkjet heads ("KJ4B-HD06MHG-STDV", manufactured by Kyocera Corporation, piezo type) and an under heater that heated the printing substrate from the back side of the surface of the printing substrate facing the inkjet heads. The two inkjet heads in the front row were filled with a water-based ink, and the inkjet head in the last row was filled with an overcoat liquid. The distance between the under heater and the printing substrate was set to 0.2 mm, the distance between the inkjet heads and the printing substrate was set to 1.0 mm, and the surface temperature of the under heater was set to 40°C.

In an environment with a temperature of 25±1°C and a relative humidity of 30±5%, the settings were as follows: head applied voltage was 26 V, head drive frequency was 10 kHz, head temperature was 32°C, head resolution was 600 dpi, pre-ejection flushing count was 200 shots, and negative pressure was -4.0 kPa, and the printing substrate was fixed to the printing evaluation device such that the longitudinal direction of the printing substrate matched the conveying direction.

Appropriate amounts of ink ejected from the two inkjet heads in the front row filled with the water-based ink were each set to 12 pL, and an appropriate amount of solution ejected from the inkjet head in the last row filled with the overcoat liquid was set to 5 pL.

[Step 1]

A print command was transferred to the printing evaluation device, and the water-based ink and the overcoat liquid were ejected in the stated order, and a solid image of the overcoat liquid was printed in the same location as the solid image of the water-based ink. The ejection interval between the water-based ink and the overcoat liquid was set to 1 second.

In the examples and comparative example, the equivalent ratio of the compound (II) used, calculated according to the following formula is shown in Table 4.

(Examples 1 to 11 and Comparative Example 1)

Equivalent ratio of compound (II) used = [(amount of droplets of overcoat liquid ejected (5 pl) × content of compound (II) in overcoat liquid) / reactive group equivalent amount of compound (II)] / [(amount of droplets of water-based ink ejected (24 pL) × content of binder resin (Ib) in water-based ink × (acid value of binder resin (Ib) / (56.11 × 1000))]

(Example 12)

Equivalent ratio of compound (II) used = [(amount of droplets of water-based ink ejected × content of compound (II) in water-based ink) / reactive group equivalent amount of compound (II)] / [(amount of droplets of overcoat liquid ejected × content of binder resin (Ib) in overcoat liquid × (acid value of binder resin (Ib) / (56.11 × 1000))]

[Step 2]

Then, the printed material was obtained through drying by performing heating treatment in a hot air dryer at 60°C for 1 minute. The scratch resistance and water resistance of the resulting printed material before shrinkage were evaluated using the following methods.

[Evaluation of Scratch Resistance of Printed Material Before Shrinkage]

Each of the obtained printed materials was rubbed with a load of 300 g using the tip of the index finger while measuring the load on the fingertip during the rub test using a mass measuring device ("GX-6100" manufactured by A&D Company, Ltd.). After the printed surface was rubbed back and forth 50 times, the surface condition was visually inspected, and scratch resistance was evaluated using the following evaluation criteria.

(Evaluation Criteria)

A: No change at all
B: No change in 90% or more of a target area
C: No change in 70% or more of a target area
D: Change in 50% or more of a target area

When the evaluation is C or higher, there is no practical problem with respect to scratch resistance.

[Evaluation of Water Resistance of Printed Material Before Shrinkage]

Each of the resulting printed materials was cut into a 3×3 cm test piece, which was then immersed in ion-exchanged water contained in a screw tube manufactured by Maruemu Corporation, and left at room temperature for 24 hours. Thereafter, each of the test pieces of the printed materials was taken out from the screw tube and rubbed with a load of 300 g using the tip of the index finger while measuring the load on the fingertip using a mass measuring device ("GX-6100" manufactured by A&D Company, Ltd.). After the printed surface was rubbed back and forth 10 times, the surface condition was visually inspected, and scratch resistance was evaluated using the following evaluation criteria.

(Evaluation Criteria)

A: No change at all
B: No change in 90% or more of a target area
C: No change in 70% or more of a target area
D: Change in 50% or more of a target area

When the evaluation is C or higher, there is no practical problem with respect to water resistance.

(Preparation of Shrunken Printed Materials)

Samples were prepared using each of the obtained printed materials in accordance with the test described in JIS Z 1709-1995. The sample was cut from the solid image portion of the printed material such that its size was 100 mm in the winding direction MD (longitudinal) and 100 mm in the width direction TD (lateral).
The heat transfer liquid specified in the standard was changed to water, and the sample was immersed in hot water heated to 90°C for 10 seconds to cause thermal shrinkage, and then immersed in water at room temperature for 5 seconds to cool. This sample was left to dry for 24 hours in an environment at 23°C and 50% humidity, and then subjected to the same scratch resistance and water resistance tests as those for the printed material before shrinkage.

[Table 4]

Table 4

| | | Example | | | | | | | | | | | | | Comp. Ex. |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 |
| Type of water-based ink | | W-1 | W-1 | W-1 | W-1 | W-1 | W-1 | W-1 | W-1 | W-1 | W-1 | W-2 | K-1 | W-3 | W-1 |
| Type of overcoat liquid | | OC-1 | OC-2 | OC-3 | OC-4 | OC-6 | OC-7 | OC-8 | OC-9 | OC-10 | OC-11 | OC-1 | OC-1 | OC-12 | OC-5 |
| Equivalent ratio of compound (II) used | | 5 | 5 | 5 | 5 | 5 | 5 | 5 | 5 | 1 | 3 | 5 | 5 | 5 | 5 |
| Difference $\Delta\gamma$ between surface tension $\gamma$(B) and surface tension $\gamma$(A) (mN/m) | | 13.3 | 9.3 | 4.1 | 1.7 | 13.1 | 11.7 | 10.0 | 8.4 | 13.3 | 13.3 | 13.2 | 13.2 | 22.5 | -0.3 |
| Evaluation of printed material before shrinkage | Scratch resistance | A | A | A | A | A | A | A | A | A | A | A | A | A | A |
| | Water resistance | A | A | A | A | A | A | A | A | A | A | A | A | A | B |
| Evaluation of printed material after shrinkage | Scratch resistance | A | A | A | A | C | A | A | C | C | A | A | A | A | A |
| | Water resistance | A | A | B | C | C | C | C | C | C | B | A | A | A | D |

Table 4 shows that the ink sets of the examples are superior to the comparative example in terms of, in particular, scratch resistance and water resistance of heat-shrunk printed materials.

In Examples 1 to 4, the type and amount of surfactant contained in the overcoat liquid were changed to adjust the surface tension y(B) of the overcoat liquid, but the scratch resistance and water resistance before shrinkage were all rated "A". In Examples 1 to 4, the scratch resistance and water resistance after shrinkage are improved as the difference $\Delta\gamma$ between the surface tension y(B) of the overcoat liquid and the surface tension y(A) of the water-based ink increases. Based on this, it is conceivable that the results of the scratch resistance and water resistance of the printed material after shrinkage in Examples 1 to 4 were obtained not due to changes in the type and amount of surfactant mixed, but rather due to the fact that Marangoni convection was generated due to the difference $\Delta\gamma$ between the surface tension y(B) of the overcoat liquid and the surface tension y(A) of the water-based ink, which caused the compound (II) having a reactive group contained in the overcoat liquid coating to be uniformly distributed in the water-based ink coating, promoting a uniform cross-linking reaction between the carboxyl group of the binder resin (Ib) and the reactive group of the compound (II), thereby enabling the production of the printed material having the printed coating with uniform strength.

Example 13 is an ink set, in which the water-based ink contains a compound (II) having a reactive group capable of cross-linking with a carboxy group of a binder resin (Ib) having carboxy groups, and the overcoat liquid contains the binder resin (Ib) having carboxy groups. It can be seen that this ink set also makes it possible to improve the scratch resistance and water resistance of the heat-shrunk printed material.

Industrial Applicability

According to the present invention, it is possible to provide an inkjet printing ink set, an inkjet printing method, and a packaging method that provide a heat-shrunk printed material having excellent scratch resistance and water resistance when printing on a heat-shrinkable resin film.

## Claims

**1.** An inkjet printing ink set comprising:

a water-based ink containing a pigment; and
an overcoat liquid substantially free of pigment,
wherein the water-based ink contains a binder resin (Ib) having carboxy groups,
wherein the overcoat liquid contains a compound (II) having a reactive group capable of cross-linking with the carboxy group of the binder resin (Ib), and
wherein a surface tension y(B) of the overcoat liquid is greater than a surface tension y(A) of the water-based ink.

**2.** An inkjet printing ink set comprising:

a water-based ink containing a pigment; and
an overcoat liquid substantially free of pigment,
wherein the water-based ink contains a compound (II) having a reactive group capable of cross-linking with a carboxy group of a binder resin (Ib) having carboxy groups,
wherein the overcoat liquid contains the binder resin (Ib) having carboxy groups, and
wherein a surface tension y(B) of the overcoat liquid is greater than a surface tension y(A) of the water-based ink.

**3.** The inkjet printing ink set according to claim 1 or 2,
wherein a difference $\Delta\gamma$ between the surface tension y(B) of the overcoat liquid and the surface tension y(A) of the water-based ink is 1.5 mN/m or more.

**4.** The inkjet printing ink set according to any one of claims 1 to 3,
wherein a reactive group equivalent amount of the compound (II) is 100 or more and 500 or less.

**5.** The inkjet printing ink set according to any one of claims 1 to 4,
wherein the compound (II) is one or more selected from the group consisting of a polyfunctional carbodiimide compound, a polyfunctional oxazoline compound, and a polyfunctional epoxy compound.

**6.** The inkjet printing ink set according to any one of claims 1 to 5,
wherein the compound (II) is a polyfunctional carbodiimide compound.

7. An inkjet printing method using the inkjet printing ink set according to any one of claims 1 to 6, comprising the following Step 1 and Step 2:

Step 1: After applying the water-based ink to a heat-shrinkable resin film substrate using an inkjet ejection method, applying the overcoat liquid to the area where the water-based ink was applied using an inkjet ejection method; and
Step 2: Heating a coating of the water-based ink and a coating of the overcoat liquid formed on a printing substrate in Step 1.

8. A packaging method comprising:
disposing a printed material obtained using the inkjet printing method according to claim 7 around an object to be packaged and then shrinking the heat-shrinkable resin film substrate of the printed material to obtain a package.

9. A use of an inkjet printing ink set comprising:

a water-based ink containing a pigment; and
an overcoat liquid substantially free of pigment,
wherein the water-based ink contains a binder resin (Ib) having carboxy groups,
wherein the overcoat liquid contains a compound (II) having a reactive group capable of cross-linking with the carboxy group of the binder resin (Ib), and
wherein a surface tension y(B) of the overcoat liquid is greater than a surface tension y(A) of the water-based ink.

10. A use of an inkjet printing ink set comprising:

a water-based ink containing a pigment; and
an overcoat liquid substantially free of pigment,
wherein the water-based ink contains a compound (II) having a reactive group capable of cross-linking with a carboxy group of a binder resin (Ib) having carboxy groups,
wherein the overcoat liquid contains the binder resin (Ib) having carboxy groups, and
wherein a surface tension y(B) of the overcoat liquid is greater than a surface tension y(A) of the water-based ink.

## INTERNATIONAL SEARCH REPORT

International application No. **PCT/JP2024/037483**

### A. CLASSIFICATION OF SUBJECT MATTER

***C09D 11/54***(2014.01)i; ***B41J 2/01***(2006.01)i
FI: C09D11/54; B41J2/01 501

According to International Patent Classification (IPC) or to both national classification and IPC

### B. FIELDS SEARCHED

Minimum documentation searched (classification system followed by classification symbols)

C09D11/54; B41J2/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2022-048515 A (RICOH COMPANY, LTD.) 28 March 2022 (2022-03-28) claims 1-14, examples 1, 4, tables 1-4, 6 | 1-6, 9-10<br>7-8 |
| Y<br>A | JP 2023-096217 A (TOYO INK SC HOLDINGS CO., LTD.) 07 July 2023 (2023-07-07) claims 1-7, paragraphs [0045]-[0046], [0090], example 8, tables 4-5 | 1-6, 9-10<br>7-8 |
| A | JP 2020-094080 A (FUJIFILM CORPORATION) 18 June 2020 (2020-06-18) entire text, all drawings | 1-10 |
| A | JP 2023-088078 A (SEIREN CO., LTD.) 26 June 2023 (2023-06-26) entire text, all drawings | 1-10 |
| A | JP 2022-136072 A (DNP FINE CHEMICALS CO., LTD.) 15 September 2022 (2022-09-15) entire text, all drawings | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/037483**

**C. DOCUMENTS CONSIDERED TO BE RELEVANT**

| Category* | Citation of document, with indication, where appropriate, of the relevant passages | Relevant to claim No. |
|---|---|---|
| A | JP 2021-146557 A (RICOH COMPANY, LTD.) 27 September 2021 (2021-09-27) entire text, all drawings | 1-10 |
| A | JP 2017-071071 A (CANON KABUSHIKI KAISHA) 13 April 2017 (2017-04-13) entire text, all drawings | 1-10 |
| A | JP 2009-175501 A (DAI NIPPON PRINTING CO., LTD.) 06 August 2009 (2009-08-06) entire text, all drawings | 1-10 |
| A | US 2017/0174379 A1 (UPM RAFLATAC OY) 22 June 2017 (2017-06-22) entire text, all drawings | 1-10 |

Form PCT/ISA/210 (second sheet) (July 2022)

**INTERNATIONAL SEARCH REPORT**
**Information on patent family members**

International application No.
**PCT/JP2024/037483**

| Patent document cited in search report | Publication date (day/month/year) | Patent family member(s) | Publication date (day/month/year) |
|---|---|---|---|
| JP 2022-048515 A | 28 March 2022 | (Family: none) | |
| JP 2023-096217 A | 07 July 2023 | (Family: none) | |
| JP 2020-094080 A | 18 June 2020 | WO 2018/179848 A1 | |
| JP 2023-088078 A | 26 June 2023 | (Family: none) | |
| JP 2022-136072 A | 15 September 2022 | US 2024/0117210 A1 | |
| | | WO 2022/186280 A1 | |
| | | EP 4303005 A1 | |
| | | CN 116867860 A | |
| JP 2021-146557 A | 27 September 2021 | (Family: none) | |
| JP 2017-071071 A | 13 April 2017 | (Family: none) | |
| JP 2009-175501 A | 06 August 2009 | (Family: none) | |
| US 2017/0174379 A1 | 22 June 2017 | EP 3184298 A1 | |
| | | CN 106898250 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019189867 A